(19) **Europäisches Patentamt / European Patent Office / Office européen des brevets**

(11) **EP 4 177 221 A1**

(12) **EUROPEAN PATENT APPLICATION**
published in accordance with Art. 153(4) EPC

(43) Date of publication:
**10.05.2023 Bulletin 2023/19**

(21) Application number: **21838865.0**

(22) Date of filing: **05.07.2021**

(51) International Patent Classification (IPC):
**C01G 53/00** (2006.01) **H01M 4/505** (2010.01)
**H01M 4/525** (2010.01)

(52) Cooperative Patent Classification (CPC):
**C01G 53/00; H01M 4/505; H01M 4/525;**
Y02E 60/10

(86) International application number:
**PCT/JP2021/025343**

(87) International publication number:
**WO 2022/009843 (13.01.2022 Gazette 2022/02)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **06.07.2020 JP 2020116515**

(71) Applicants:
• **SUMITOMO CHEMICAL COMPANY, LIMITED**
**Tokyo 103-6020 (JP)**
• **Tanaka Chemical Corporation**
**Fukui-shi, Fukui 910-3131 (JP)**

(72) Inventor: **HANAFUSA, Tatsuya**
**Niihama-shi, Ehime 792-8521 (JP)**

(74) Representative: **Vossius & Partner**
**Patentanwälte Rechtsanwälte mbB**
**Siebertstraße 3**
**81675 München (DE)**

(54) **PRECURSOR FOR POSITIVE ELECTRODE ACTIVE MATERIAL OF LITHIUM SECONDARY BATTERY, LITHIUM METAL COMPOSITE OXIDE, POSITIVE ELECTRODE ACTIVE MATERIAL FOR LITHIUM SECONDARY BATTERY, POSITIVE ELECTRODE FOR LITHIUM SECONDARY BATTERY, AND LITHIUM SECONDARY BATTERY**

(57)    A precursor for a lithium secondary battery positive electrode active material, containing at least Ni and an element M, in which the element M is one or more elements selected from the group consisting of Co, Mn, Fe, Cu, Ti, Mg, Al, W, Mo, Nb, Zn, Sn, Zr, Ga, V, B, Si, S, and P, when measurement is carried out with a laser diffraction type particle size distribution measuring instrument and all in an obtained cumulative particle size distribution curve is set to 100%, a value of $D_{60}/D_{10}$ that is a ratio between a particle diameter $D_{60}$ ($\mu$m) at which a cumulative volume from a small particle side becomes 60% and a particle diameter $D_{10}$ ($\mu$m) at which the cumulative volume from the small particle side becomes 10% is 2.0 or less, and a BET specific surface area is 20 $m^2$/g or more.

EP 4 177 221 A1

**Description**

[Technical Field]

The present invention relates to a precursor for a lithium secondary battery positive electrode active material, a lithium metal composite oxide, a positive electrode active material for a lithium secondary battery, a positive electrode for a lithium secondary battery, and a lithium secondary battery.
Priority is claimed on Japanese Patent Application No. 2020-116515, filed in Japan on July 6, 2020, the content of which is incorporated herein by reference.

[Background Art]

Lithium metal composite oxides are being used as positive electrode active materials for lithium secondary batteries. Attempts of putting lithium secondary batteries into practical use not only for small-sized power sources in mobile phone applications, notebook personal computer applications, and the like but also for medium-sized or large-sized power sources in automotive applications, power storage applications, and the like have already been underway.
A lithium metal composite oxide is produced by, for example, using a metal composite compound containing nickel or cobalt as a precursor, mixing this precursor and a lithium compound, and calcining the mixture. A lithium metal composite oxide capable of exhibiting desired characteristics can be produced by controlling the physical properties of a precursor to be obtained in steps for producing the precursor.
For example, Patent Document 1 describes lithium cobalt oxide having uniformity ($D_{60}/D_{10}$) obtained from particle size distribution measurement in a specific range. In Patent Document 1, the physical properties of lithium cobalt oxide to be produced are controlled by using granular cobalt acid particles that satisfy specific physical properties as a precursor.

[Citation List]

[Patent Document]

[Patent Document 1]
JP-B-4412568

[Summary of Invention]

[Technical Problem]

As the application fields of lithium secondary batteries progress, for example, additional improvement in cycle retention rate is in demand.
The present invention has been made in view of the above-described circumstances, and an object of the present invention is to provide a precursor for a lithium secondary battery positive electrode active material from which a lithium metal composite oxide capable of improving the cycle retention rate of a lithium secondary battery more than ever can be produced, a lithium metal composite oxide, a positive electrode active material for a lithium secondary battery, a positive electrode for a lithium secondary battery, and a lithium secondary battery.

[Solution to Problem]

[1] A precursor for a lithium secondary battery positive electrode active material, containing at least Ni and an element M, in which the element M is one or more elements selected from the group consisting of Co, Mn, Fe, Cu, Ti, Mg, Al, W, Mo, Nb, Zn, Sn, Zr, Ga, V, B, Si, S, and P, when the precursor for the lithium secondary battery positive electrode active material is measured with a laser diffraction type particle size distribution measuring instrument and all in an obtained cumulative particle size distribution curve is set to 100%, a value of $D_{60}/D_{10}$ that is a ratio between a particle diameter $D_{60}$ ($\mu$m) at which a cumulative volume from a small particle side becomes 60% and a particle diameter $D_{10}$ ($\mu$m) at which the cumulative volume from the small particle side becomes 10% is 2.0 or less, and a BET specific surface area is 20 $m^2/g$ or more.
[2] The precursor for the lithium secondary battery positive electrode active material according to [1], which is represented by a composition formula (A).

$$Ni_{1-x}M_xO_z(OH)_{2-t} \dots \qquad (A)$$

(In the composition formula (A), $0 < x \leq 0.3$, $0 \leq z \leq 3$, and $-0.5 \leq t \leq 2$ are satisfied, and M is one or more elements selected from the group consisting of Co, Mn, Fe, Cu, Ti, Mg, Al, W, Mo, Nb, Zn, Sn, Zr, Ga, V, B, Si, S, and P).

[3] The precursor for the lithium secondary battery positive electrode active material according to [1] or [2], in which a formula (B) is satisfied.

$$6/(D_{50} \times S) \leq 0.035 \text{ g/cm}^3 \dots (B)$$

($D_{50}$ is a particle diameter ($\mu$m) at which the cumulative volume from the small particle side becomes 50% when all in the cumulative particle size distribution curve is set to 100%. S is the BET specific surface area ($m^2$/g) of the precursor for the lithium secondary battery positive electrode active material.)

[4] The precursor for the lithium secondary battery positive electrode active material according to any one of [1] to [3], in which a ratio $D_{10}/D_{50}$ between the $D_{10}$ ($\mu$m) and a particle diameter $D_{50}$ ($\mu$m) at which the cumulative volume from the small particle side becomes 50% when all in the cumulative particle size distribution curve is set to 100% is 0.55 or more.

[5] The precursor for the lithium secondary battery positive electrode active material according to any one of [1] to [4], in which the BET specific surface area is 80 $m^2$/g or less.

[6] A lithium metal composite oxide having a layered structure, containing at least Ni and an element M, in which the element M is one or more elements selected from the group consisting of Co, Mn, Fe, Cu, Ti, Mg, Al, W, Mo, Nb, Zn, Sn, Zr, Ga, V, B, Si, S, and P, when the lithium metal composite oxide is measured with a laser diffraction type particle size distribution measuring instrument and all in an obtained cumulative particle size distribution curve is set to 100%, a value of $D_{60}/D_{10}$ that is a ratio between a particle diameter $D_{60}$ ($\mu$m) at which a cumulative volume from a small particle side becomes 60% and a particle diameter $D_{10}$ ($\mu$m) at which the cumulative volume from the small particle side becomes 10% is 2.5 or less, and a BET specific surface area is 0.30 $m^2$/g or more and 0.60 $m^2$/g or less.

[7] The lithium metal composite oxide according to [6], which is represented by a composition formula (1).

$$Li[Li_m(Ni_{(1-n)}M_n)_{1-m}]O_2 \dots \qquad (1)$$

(where M is one or more elements selected from the group consisting of Co, Mn, Fe, Cu, Ti, Mg, Al, W, Mo, Nb, Zn, Sn, Zr, Ga, V, B, Si, S, and P, $-0.1 \leq m \leq 0.2$, $0 < n \leq 0.3$, and $0 < m + n < 0.3$ are satisfied.)

[8] The lithium metal composite oxide according to [6] or [7], in which a ratio $D_{10}/D_{50}$ between the $D_{10}$ ($\mu$m) and a particle diameter $D_{50}$ ($\mu$m) at which the cumulative volume from the small particle side becomes 50% when all in the cumulative particle size distribution curve is set to 100% is 0.40 or more and less than 0.60.

[9] The lithium metal composite oxide according to any one of [6] to [8], in which a ratio $\alpha/\beta$ between a crystallite size $\alpha$ obtained from a peak within a range of $2\theta = 18.7 \pm 2°$ in X-ray diffraction measurement using CuK$\alpha$ rays and a crystallite size $\beta$ obtained from a peak within a range of $2\theta = 44.6 \pm 2°$ is 1.71 or more and 2.50 or less.

[10] A positive electrode active material for a lithium secondary battery, containing the lithium metal composite oxide according to any one of [6] to [9].

[11] A positive electrode for a lithium secondary battery, containing the positive electrode active material for a lithium secondary battery according to [10].

[12] A lithium secondary battery having the positive electrode for a lithium secondary battery according to [11].

[Advantageous Effects of Invention]

According to the present invention, it is possible to provide a precursor for a lithium secondary battery positive electrode active material from which a lithium metal composite oxide having a high cycle retention rate of a lithium secondary battery can be produced, a lithium metal composite oxide, a positive electrode active material for a lithium secondary battery, a positive electrode for a lithium secondary battery, and a lithium secondary battery.

[Brief Description of Drawings]

FIG. 1A is a schematic configuration view showing an example of a lithium secondary battery.

FIG. 1B is a schematic configuration view showing the example of the lithium secondary battery.
FIG. 2 is a schematic view showing one example of stirring means that is used in the present embodiment.
FIG. 3 is a schematic view of a cross section of a Taylor vortex continuous stirred reactor.
FIG. 4 is a schematic view of a crystallite having a crystal structure belonging to a space group R-3m.
FIG. 5 is a schematic view showing a laminate that an all-solid-state lithium-ion secondary battery includes.
FIG. 6 is a schematic view showing an entire configuration of the all-solid-state lithium-ion secondary battery.

[Description of Embodiments]

<Definition>

In the present specification, "precursor for a lithium secondary battery positive electrode active material" will be referred to as "precursor" in some cases.

In the present specification, lithium metal composite oxide will be referred to as "LiMO" below.

A notation "Li" does not indicate a Li metal element, but a Li element unless particularly otherwise specified. This is also true for notations of other elements such as Ni, Co, and Mn.

In the present specification, a positive electrode active material for a lithium secondary battery will be referred to as "CAM" as an abbreviation for cathode active material for lithium secondary batteries in some cases.

In the present specification, "cycle retention rate" is measured by the following method. "The cycle retention rate is high" means that the value of the cycle retention rate exceeds 82%.

[Method for measuring cycle retention rate]

(Production of positive electrode for lithium secondary battery)

A paste-like positive electrode mixture is prepared by adding and kneading LiMO, a conductive material (acetylene black), and a binder (PVdF) in fractions in which a composition of LiMO:conductive material:binder = 92:5:3 (mass ratio) is achieved. During the preparation of the positive electrode mixture, N-methyl-2-pyrrolidone is used as an organic solvent.

The obtained positive electrode mixture is applied to a 40 $\mu$m-thick Al foil, which is to serve as a current collector, and dried in a vacuum at 150°C for eight hours, thereby obtaining a positive electrode for the lithium secondary battery. The electrode area of the lithium secondary battery positive electrode is set to 1.65 cm$^2$.

(Production of lithium secondary battery (coin-type half cell))

The following operation is carried out in a glove box under an argon atmosphere.

The lithium secondary battery positive electrode produced in the section (Production of positive electrode for lithium secondary battery) was placed on the lower lid of a part for a coin-type battery R2032 (manufactured by Hohsen Corp.) with the aluminum foil surface facing downward, and a separator (polyethylene porous film) was placed on the lithium secondary battery positive electrode. An electrolyte solution (300 $\mu$l) was poured thereinto. As the electrolyte solution, an electrolyte solution obtained by dissolving LiPF$_6$ in a liquid mixture of ethylene carbonate, dimethyl carbonate, and ethyl methyl carbonate in a volume ratio of 30:35:35 in a fraction of 1.0 mol/l is used.

Next, metal lithium is used as a negative electrode, and the negative electrode is placed on the upper side of the laminated film separator. An upper lid is placed through a gasket and caulked using a caulking machine, thereby producing a lithium secondary battery (coin-type half cell R2032; hereinafter, referred to as the "half cell" in some cases).

(Measurement of cycle retention rate)

First, a coin-type lithium secondary battery is left to stand at room temperature for 10 hours to sufficiently impregnate the separator and the positive electrode mixture layer with an electrolyte solution.

Next, constant-current constant-voltage charging by which the coin-type lithium secondary battery is constant-current charged up to 4.3 V at room temperature and 1 mA up and then constant-voltage charged at 4.3 V is carried out for five hours, and then constant-current discharging by which the coin-type lithium secondary battery is discharged to 2.5 V at 1 mA is carried out, thereby carrying out initial charge and discharge.

The discharge capacity is measured, and the obtained value is defined as the "initial discharge capacity" (mAh/g).

The charge capacity is measured, and the obtained value is defined as the "initial charge capacity" (mAh/g).

After the initial charge and discharge, charge at 1 mA and discharge at 1 mA are repeated under the same conditions as the initial charge and discharge.

After that, the discharge capacity (mAh/g) at the 50th cycle is measured.

From the initial discharge capacity and the discharge capacity at the 50th cycle, the cycle retention rate is calculated by the following formula. As the cycle retention rate increases, a decrease in the battery capacity after the repetition of charge and discharge is further suppressed, which is desirable as the battery performance.

$$\text{Cycle retention rate (\%)} = 50^{\text{th}} \text{ cycle discharge capacity (mAh/g)} \div \text{initial}$$

$$\text{discharge capacity (mAh/g)} \times 100.$$

[Measurement of cumulative volume particle size distribution]

In the present specification, the cumulative volume particle size distributions of the precursor and LiMO are measured by the laser diffraction scattering method. As a particle size distribution measuring instrument, for example, MASTERSIZER 2000 manufactured by Malvern Panalytical Ltd. can be used.

When all in the obtained cumulative particle size distribution curve is set to 100%, a particle diameter at which the cumulative volume fraction from the small particle side becomes 10% is regarded as $D_{10}$ ($\mu$m), a particle diameter at which the cumulative volume fraction becomes 50% is regarded as $D_{50}$ ($\mu$m), and a particle diameter at which the cumulative volume fraction from the small particle side becomes 60% is regarded as $D_{60}$ ($\mu$m).

[Measurement of BET specific surface area]

In the present specification, the BET specific surface areas of the precursor and LiMO are measured using a BET specific surface area measuring instrument. As a BET specific surface area measuring instrument, for example, FLOWSORB 2300II, a fluid type automatic specific surface area measuring instrument manufactured by Shimadzu Corporation can be used. Specifically, the precursor or LiMO powder (1 g) is dried in a nitrogen atmosphere at 105°C for 30 minutes, and then the BET specific surface area is measured with the BET specific surface area measuring instrument.

[Composition analysis of LiMO]

In the present specification, the composition of LiMO is measured using an ICP emission spectrometer after dissolving the precursor or LiMO powder in hydrochloric acid. As the ICP emission spectrometer, for example, Optima 7300 manufactured by Perkin Elmer Inc. can be used.

[Powder X-ray diffraction measurement]

In the present specification, powder X-ray diffraction measurement can be measured with an X-ray diffractometer. As the X-ray diffractometer, it is possible to use, for example, Ultima IV manufactured by Rigaku Corporation.

Specifically, the LiMO powder is loaded into a dedicated substrate, and the measurement is carried out using a Cu-K$\alpha$ radiation source under conditions of a diffraction angle of $2\theta = 10°$ to $90°$, a sampling width of $0.02°$, and a scan speed of 4 °/min, thereby obtaining a powder X-ray diffraction spectrum. From the obtained X-ray diffraction spectrum, a peak within a range of $2\theta = 18.7 \pm 2°$ and a peak within a range of $20 = 44.6 \pm 2°$ are determined.

Using integrated powder X-ray analysis software JADE, from the powder X-ray diffraction spectrum, the half-value width A of the diffraction peak within the range of $2\theta = 18.7 \pm 2°$ and the half-value width B of the diffraction peak within the range of $20 = 44.6 \pm 2°$ are calculated.

The diffraction angles of the peaks and the obtained half-value widths are assigned into the Scherrer formula ($D = K\lambda/E\cos\theta$ (D: crystallite size, K: Scherrer constant, E: half-value width of the peak)), and the crystallite sizes $\alpha$ and $\beta$ are each calculated.

Calculating the crystallite sizes from the half-value widths of the diffraction peaks using the Scherrer formula is a technique that has been used conventionally (for example, "X-ray structural analysis - determining the arrangement of atoms -", third edition published on April 30, 2002, written by Yoshio Waseda and Eiichiro Matsubara, reference).

<Precursor>

The present embodiment is a precursor containing at least Ni and an element M. The precursor does not contain Li.

The element M is one or more elements selected from the group consisting of Co, Mn, Fe, Cu, Ti, Mg, Al, W, Mo, Nb, Zn, Sn, Zr, Ga, V, B, Si, S, and P.

LiMO can be produced by mixing and calcining the precursor and a lithium compound.

$[D_{60}/D_{10}]$

In the precursor, the value of a ratio $D_{60}/D_{10}$ between $D_{60}$ and $D_{10}$ is 2.0 or less, preferably 1.99 or less, more preferably 1.98 or less, and still more preferably 1.97 or less.

As $D_{60}/D_{10}$ becomes closer to 1, the peak width in the particle size distribution becomes narrower. In the present specification, "particle size distribution with a narrow peak width" will be referred to as "sharp particle size distribution" in some cases.

The lower limit value of $D_{60}/D_{10}$ is preferably as closer to 1 as possible. Examples of the lower limit value include 1.00 or more, 1.10 or more, 1.20 or more, and 1.30 or more.

The upper limit value and lower limit value of $D_{60}/D_{10}$ can be randomly combined together.

As examples of the combination, $D_{60}/D_{10}$'s of 1.00 or more and 2.00 or less, 1.10 or more and 1.99 or less, 1.20 or more and 1.98 or less, and 1.30 or more and 1.97 or less are exemplary examples.

A precursor having a $D_{60}/D_{10}$ that satisfies the above-described specific range means that the precursor has a sharp particle size distribution regardless of the form of the particle size distribution. $D_{60}/D_{10}$ is a physical property that is also used as one of the evaluation indexes of powder flow characteristics.

[BET specific surface area]

In the precursor, the BET specific surface area is 20 $m^2/g$ or more, preferably 26 $m^2/g$ or more, and more preferably 30 $m^2/g$ or more.

In the precursor, the BET specific surface area is preferably 80 $m^2/g$ or less, more preferably 76 $m^2/g$ or less, and still more preferably 72 $m^2/g$ or less.

The upper limit value and lower limit value of the BET specific surface area can be randomly combined together. As examples of the combination, the BET specific surface areas of 20 $m^2/g$ or more and 80 $m^2/g$ or less, 26 $m^2/g$ or more and 76 $m^2/g$ or less, and 30 $m^2/g$ or more and 72 $m^2/g$ or less are exemplary examples.

LiMO produced using a precursor having a $D_{60}/D_{10}$ of 2.0 or less and a BET specific surface area of 20 $m^2/g$ or more is capable of improving the cycle retention rate of a lithium secondary battery when used as CAM. The reason therefor is considered as described below.

LiMO produced using the precursor of the present embodiment as a raw material is considered to exhibit a sharp particle size distribution where the value of $D_{60}/D_{10}$ is close to 1. Particles exhibiting a sharp particle size distribution have a small abundance of secondary particles that are aggregates of primary particles. CAM containing such LiMO has a small number of interfaces between primary particles, and LiMO particles are less likely to crack during charge and discharge.

New surfaces that are generated by cracking of the particles decompose an electrolyte solution and generate a gas. In addition, minute gaps between the new surfaces can act as resistance to the migration of lithium ions.

In LiMO produced using the precursor of the present embodiment as a raw material, LiMO particles, which can act as migration resistance of lithium ions, are less likely to crack. Therefore, LiMO is capable of improving the cycle retention rate of a lithium secondary battery when used as CAM.

The use of a precursor having a BET specific surface area of 20 $m^2/g$ or more makes it possible to increase the reactivity with Li in a step of calcining a mixture of the precursor and a lithium compound. The use of such a precursor as a raw material makes it easy to obtain LiMO in which the BET specific surface area is 0.30 $m^2/g$ or more and lithium ions are uniformly distributed in the LiMO particles.

In LiMO having a BET specific surface area of less than 0.30 $m^2/g$, it is likely that LiMO crystals excessively grow and the contact area between the LiMO particles becomes small. In this case, the migration resistance of lithium ions on the surface of LiMO can increase.

In LiMO produced by using the precursor of the present embodiment as a raw material, since the crystals do not excessively grow, the migration resistance of lithium ions is less likely to increase.

Furthermore, LiMO produced using the precursor of the present embodiment as a raw material is likely to be in a state where lithium ions are uniformly distributed in the particles. Such LiMO is likely to improve the lithium ion conductivity. When such LiMO is used as CAM, it is possible to improve the cycle retention rate of a lithium secondary battery.

When a precursor having a BET specific surface area of 80 $m^2/g$ or less is used as a raw material, LiMO having a BET specific surface area of 0.60 $m^2/g$ or less is easily obtained.

In CAM in which LiMO having a BET specific surface area of the above-described upper limit value or less is used, the contact area with an electrolyte solution is less likely to excessively increase, and an irreversible reaction is easily suppressed. Here, "irreversible reaction" is, for example, a reaction other than migration of lithium ions in a case where charge and discharge have been repeated.

When LiMO produced using the precursor of the present embodiment as a raw material is used as CAM, the contact area with an electrolyte solution is less likely to increase excessively. Therefore, the irreversible reaction is easily suppressed, and the cycle retention rate of a lithium secondary battery can be improved.

[Composition]

The precursor preferably satisfies the following composition formula (A).

$$Ni_{1-x}M_xO_z(OH)_{2-t} ... \quad\quad (A)$$

(In the composition formula (A), $0 < x \leq 0.3$, $0 \leq z \leq 3$, and $-0.5 \leq t \leq 2$ are satisfied, and M is one or more elements selected from the group consisting of Co, Mn, Fe, Cu, Ti, Mg, Al, W, Mo, Nb, Zn, Sn, Zr, Ga, V, B, Si, S, and P).

The lower limit value of x is preferably 0.01, more preferably 0.02, and particularly preferably 0.03. The upper limit value of x is preferably 0.44, more preferably 0.42, and particularly preferably 0.40.

The upper limit value and lower limit value of x can be randomly combined together.

As an example of the combination, $0.01 \leq x \leq 0.44$ is preferred, $0.02 \leq x \leq 0.42$ is more preferred, and $0.03 \leq x \leq 0.40$ is particularly preferred.

The lower limit value of z is preferably 0.02, more preferably 0.03, and particularly preferably 0.05. The upper limit value of z is preferably 0.50, more preferably 0.40, and particularly preferably 0.30. The upper limit and lower limit thereof can be randomly combined.

As an example of the combination, $0.02 \leq z \leq 0.50$ is preferred, $0.03 \leq z \leq 0.40$ is more preferred, and $0.05 \leq z \leq 0.30$ is particularly preferred.

The lower limit value of t is preferably -0.45, more preferably -0.40, and particularly preferably -0.35. The upper limit value of t is preferably 1.8, more preferably 1.6, and particularly preferably 1.4. The upper limit and lower limit thereof can be randomly combined.

As an example of the combination, $-0.45 \leq t \leq 1.8$ is preferred, $-0.40 \leq t \leq 1.6$ is more preferred, and $-0.35 \leq t \leq 1.4$ is particularly preferred.

The composition formula (A) preferably satisfies $t - z < 0$.

[Formula (B)]

The precursor preferably satisfies the following formula (B).

$$6/(D_{50} \times S) \leq 0.035 \text{ g/cm}^3 ... (B)$$

($D_{50}$ ($\mu$m) is a particle diameter at which the cumulative volume from the small particle side becomes 50% when all in the cumulative particle size distribution curve is set to 100%. S is the BET specific surface area (m$^2$/g) of the precursor.)

The value of $6/(D_{50} \times S)$ is more preferably 0.034 g/cm$^3$ or less and still more preferably 0.033 g/cm$^3$ or less. The lower limit of $6/(D_{50} \times S)$ is, for example, 0.001 g/cm$^3$ or more, 0.002 g/cm$^3$ or more, or 0.003 g/cm$^3$ or more.

The upper limit value and lower limit value of the value of $6/(D_{50} \times S)$ can be randomly combined together.

As examples of the combination, 0.001 g/cm$^3 \leq 6/(D_{50} \times S) \leq 0.035$ g/cm$^3$, 0.002 g/cm$^3 \leq 6/(D_{50} \times S) <\_ 0.034$ g/cm$^3$, and 0.003 g/cm$^3 \leq 6/(D_{50} \times S) <\_ 0.033$ g/cm$^3$ are exemplary examples.

The precursor satisfying the formula (B) has a larger BET specific surface area than precursors having approximately the same particle diameter and is likely to react with a lithium compound in a calcining step. The use of such a precursor as a raw material makes it easy to obtain LiMO in which lithium ions are uniformly distributed in the particles.

LiMO produced using the precursor of the present embodiment as a raw material is likely to be in a state where lithium ions are uniformly distributed in the particles. Therefore, LiMO is capable of improving the cycle retention rate of a lithium secondary battery when used as CAM.

[$D_{10}/D_{50}$]

In the precursor, the value of a ratio $D_{10}/D_{50}$ between $D_{10}$ and $D_{50}$ is preferably 0.55 or more, more preferably 0.56 or more, and still more preferably 0.57 or more. Examples of the upper limit value of $D_{10}/D_{50}$ include 1.0 or less, 0.90 or less, and 0.80 or less. The upper limit value and lower limit value of $D_{10}/D_{50}$ can be randomly combined together.

As examples of the combination, $D_{10}/D_{50}$'s of 0.55 or more and 1.0 or less, 0.56 or more and 0.90 or less, and 0.57 or more and 0.80 or less are exemplary examples.

In LiMO produced using a precursor having a value of $D_{10}/D_{50}$ of 0.55 or more as a raw material, the fraction of particles with a small particle diameter, that is, particles with a large BET specific surface area is small. In CAM in which LiMO having a small fraction of particles with a large BET specific surface area is used, the contact area with an electrolyte solution is less likely to excessively increase, and an irreversible reaction is easily suppressed.

When LiMO produced using the precursor of the present embodiment as a raw material is used as CAM, the contact area with an electrolyte solution is less likely to increase excessively. Therefore, the irreversible reaction is easily suppressed, and the cycle retention rate of a lithium secondary battery can be improved.

<LiMO>

The present embodiment is LiMO having a layered structure.

LiMO contains at least Li, Ni and an element M.

The element M is one or more elements selected from the group consisting of Co, Mn, Fe, Cu, Ti, Mg, Al, W, Mo, Nb, Zn, Sn, Zr, Ga, V, B, Si, S, and P.

$[D_{60}/D_{10}]$

In LiMO, the value of the ratio $D_{60}/D_{10}$ between $D_{60}$ and $D_{10}$ is preferably 2.50 or less, more preferably 2.45 or less, still more preferably 2.42 or less, and far still more preferably 2.40 or less.

As $D_{60}/D_{10}$ becomes closer to 1, the particle size distribution becomes sharper.

The lower limit value of $D_{60}/D_{10}$ is preferably as closer to 1 as possible, and, as examples of the lower limit value, 1.00 or more, 1.10 or more, 1.20 or more, and 1.30 or more are exemplary examples.

The upper limit value and lower limit value of $D_{60}/D_{10}$ can be randomly combined together.

As examples of the combination, $D_{60}/D_{10}$'s of 1.00 or more and 2.50 or less, 1.10 or more and 2.45 or less, 1.20 or more and 2.42 or less, and 1.30 or more and 2.40 or less are exemplary examples.

[BET specific surface area]

In LiMO, the BET specific surface area is 0.30 $m^2/g$ or more, preferably 0.31 $m^2/g$ or more, and more preferably 0.32 $m^2/g$ or more.

In LiMO, the BET specific surface area is 0.60 $m^2/g$ or less, preferably 0.59 $m^2/g$ or less, and more preferably 0.55 $m^2/g$ or less.

The upper limit value and lower limit value of the BET specific surface area can be randomly combined together. As examples of the combination, BET specific surface areas of LiMO is 0.30 $m^2/g$ or more and 0.60 $m^2/g$ or less, 0.31 $m^2/g$ or more and 0.59 $m^2/g$ or less, and 0.32 $m^2/g$ or more and 0.55 $m^2/g$ or less are exemplary examples.

LiMO in which $D_{60}/D_{10}$ satisfies 2.5 or less and the BET specific surface area satisfies 0.30 $m^2/g$ or more and 0.60 $m^2/g$ or less is capable of improving the cycle retention rate of a lithium secondary battery when used as CAM. The reason is considered as described below.

LiMO of the present embodiment has a sharp particle size distribution where the value of $D_{60}/D_{10}$ is close to 1. Particles exhibiting a sharp particle size distribution have a small abundance of secondary particles that are aggregates of primary particles. CAM in which such LiMO is used has a small number of interfaces between primary particles, and LiMO particles are less likely to crack during charge and discharge.

When an electrolyte solution comes into contact with new surfaces that are generated by cracking of the LiMO particles, the electrolyte solution is decomposed to generate a gas. In addition, minute gaps between the new surfaces can act as resistance to the migration of lithium ions.

LiMO particles having $D_{60}/D_{10}$ within the above-described specific range are less likely to crack, and the migration resistance of lithium ions is easily suppressed. Therefore, LiMO is capable of improving the cycle retention rate of a lithium secondary battery when used as CAM.

LiMO having a BET specific surface area within the above-described specific range is particles for which crystals have appropriately grown, and the migration resistance of lithium ions on the surfaces of the LiMO particles is easily reduced.

Furthermore, in the case of using LiMO as CAM, the contact area with the electrolyte solution is less likely to increase excessively, and irreversible reactions are easily suppressed.

When LiMO in which the BET specific surface area is within the above-described specific range is used as CAM, the contact area with the electrolyte solution is less likely to increase excessively, and irreversible reactions are easily suppressed. Therefore, it is possible to improve the cycle retention rate of a lithium secondary battery.

[Composition]

LiMO preferably satisfies the following composition formula (1).

$$Li[Li_m(Ni_{(1-n)}M_n)_{1-m}]O_2 \ldots \qquad (1)$$

(where M is one or more elements selected from the group consisting of Co, Mn, Fe, Cu, Ti, Mg, Al, W, Mo, Nb, Zn, Sn, Zr, Ga, V, B, Si, S, and P, $-0.1 \leq m \leq 0.2$, $0 < n \leq 0.3$, and $0 < m + n < 0.3$ are satisfied).

In the composition formula (1), m is preferably -0.05 or more, more preferably -0.02 or more, and particularly preferably 0 or more. In addition, m is preferably 0.10 or less, more preferably 0.08 or less, and particularly preferably 0.06 or less.

The upper limit value and lower limit value of m can be randomly combined together.

m is preferably -0.05 or more and 0.20 or less, more preferably -0.02 or more and 0.10 or less, and particularly preferably 0 or more and 0.06 or less.

In the composition formula (1), from the viewpoint of obtaining a lithium secondary battery with high discharge rate characteristics, $0 < m + n \leq 0.25$ is preferable, $0.05 \leq m + n \leq 0.20$ is more preferable, and $0.07 \leq m + n \leq 0.12$ is particularly preferable.

In composition formula (1), n is preferably 0.05 or more and more preferably 0.09 or more. In addition, n is preferably 0.20 or less and more preferably 0.15 or less.

The upper limit value and lower limit value of n can be randomly combined together. As examples of the combination, n's of 0.05 or more and 0.20 or less and 0.09 or more and 0.15 or less are exemplary examples.

As a combination of m and n, $-0.02 \leq m \leq 0.10$ and $0.09 \leq n \leq 0.15$ are preferable.

$[D_{10}/D_{50}]$

In LiMO, the value of the ratio $D_{10}/D_{50}$ between $D_{10}$ and $D_{50}$ is preferably 0.40 or more and less than 0.60. $D_{10}/D_{50}$ is more preferably 0.55 or less and still more preferably 0.54 or less. $D_{10}/D_{50}$ is more preferably 0.43 or more and still more preferably 0.44 or more. The upper limit value and lower limit value of $D_{10}/D_{50}$ can be randomly combined together. As examples of the combination, 0.43 or more and 0.55 or less and 0.44 or more and 0.54 or less are exemplary examples.

In LiMO in which the value of $D_{10}/D_{50}$ satisfies the above-described specific range, the fraction of particles with a small particle diameter, that is, particles with a large BET specific surface area is small. In CAM in which LiMO having a small fraction of particles with a large BET specific surface area is used, the contact area with an electrolyte solution is less likely to excessively increase. Therefore, irreversible reactions are easily suppressed.

When LiMO having the value of $D_{10}/D_{50}$ within the above-described specific range is used as CAM, the contact area with the electrolyte solution is less likely to increase excessively. Therefore, the irreversible reaction is easily suppressed, and the cycle retention rate of a lithium secondary battery can be improved.

(Layered structure)

The crystal structure of LiMO is a layered structure and more preferably a hexagonal crystal structure or a monoclinic crystal structure.

The hexagonal crystal structure belongs to any one space group selected from the group consisting of P3, P31, P32, R3, P-3, R-3, P312, P321, P3112, P3121, P3212, P3221, R32, P3m1, P31m, P3cl, P31c, R3m, R3c, P-31m, P-31c, P-3m1, P-3c1, R-3m, R-3c, P6, P61, P65, P62, P64, P63, P-6, P6/m, P63/m, P622, P6122, P6522, P6222, P6422, P6322, P6mm, P6cc, P63cm, P63mc, P-6m2, P-6c2, P-62m, P-62c, P6/mmm, P6/mcc, P63/mcm, and P63/mmc.

In addition, the monoclinic crystal structure belongs to any one space group selected from the group consisting of P2, P21, C2, Pm, Pc, Cm, Cc, P2/m, P21/m, C2/m, P2/c, P21/c, and C2/c.

Among these, from the viewpoint of obtaining a lithium secondary battery having a high discharge capacity, the crystal structure is particularly preferably a hexagonal crystal structure belonging to the space group R-3m or a monoclinic crystal structure belonging to C2/m.

[Method for measuring crystal structure]

The crystal structure of LiMO can be measured by observation using a powder X-ray diffraction measuring instrument (for example, Ultima IV manufactured by Rigaku Corporation).

[α/β]

In LiMO, the ratio α/β between the crystallite size α obtained from a peak within a range of 2θ = 18.7 ± 2° in X-ray diffraction measurement using CuKα rays and the crystallite size β obtained from a peak within a range of 2θ = 44.6 ± 2° is preferably 1.71 or more and 2.50 or less.

"Crystallite size α" and "crystallite size β" are calculated using values that are measured by powder X-ray diffraction measurement in which CuKα rays are used as described in the [Powder X-ray diffraction measurement].

Hereinafter, a case where LiMO has a hexagonal crystal structure belonging to a space group R-3m will be more specifically described as an example using the drawings.

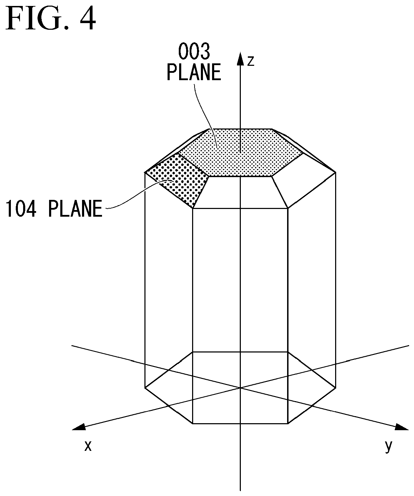

FIG. 4 is a schematic view of a crystallite having a crystal structure belonging to a space group R-3m. In the crystallite shown in FIG. 4, the crystallite size in a direction perpendicular to a 003 plane corresponds to the above-described crystallite size α. In addition, in the crystallite shown in FIG. 4, the crystallite size in a direction perpendicular to a 104 plane corresponds to the above-described crystallite size β.

As the value of α/β becomes larger than 1, crystallites grow more anisotropically parallel to the z axis in FIG. 4, and, as the value of α/β becomes closer to 1, crystallites grow more isotropically.

In LiMO in which α/β is 1.0 or more, crystallites grow anisotropically in the z-axis direction with respect to the x-axis or the y-axis in FIG. 4.

When such LiMO is used as CAM, it is possible to improve the battery performance such as the discharge capacity of a lithium secondary battery.

For example, a LiMO crystallite having α/β of 1.0 or more is defined as a case 1, a flat crystallite that has grown anisotropically in a direction parallel to the xy plane in FIG. 4 is defined as a case 2, and the crystallite of the case 1 and the crystallite of the case 2 each having the same volume are compared with each other. In this case, the distance to the center of the crystallite is shorter in the crystallite of the case 1 than in the crystallite of the case 2. Therefore, in the crystallite of the case 1, the migration of lithium ions in association with charge and discharge becomes easy.

α/β is preferably 1.71 or more and 2.50 or less. α/β is more preferably 1.72 or more and still more preferably 1.73 or more. α/β is more preferably 2.40 or less and still more preferably 2.30 or less.

The upper limit value and lower limit value of α/β can be randomly combined together. As examples of the combination, α/β's of 1.72 or more and 2.40 or less and 1.73 or more and 2.30 or less are exemplary examples.

In LiMO in which α/β satisfies the above-described specific range, since the migration resistance of lithium ions in association with charge and discharge is small, it is possible to improve the cycle retention rate of a lithium secondary battery when LiMO is used as CAM.

In one aspect of the present embodiment, the precursor and LiMO consist only of primary particles.

In one aspect of the present embodiment, the precursor and LiMO are composed of secondary particles that are each an aggregate of primary particles and primary particles that are independently present from the secondary particles.

In one aspect of the present embodiment, the precursor and LiMO consist only of secondary particles that are each an aggregate of primary particles.

In one aspect of the present embodiment, the precursor and LiMO are powders.

<Method for producing precursor>

A method for producing the precursor will be described.

The precursor contains at least Ni and the element M. Examples of the precursor include nickel cobalt manganese composite hydroxide as a metal composite hydroxide and nickel cobalt manganese composite oxide as a metal composite oxide.

Hereinafter, an embodiment in which a nickel cobalt manganese composite hydroxide is produced will be described as an example of the method for producing the precursor.

In a step of producing the precursor, a metal-containing aqueous solution containing nickel, cobalt, and manganese, a pH-adjusting solution, and a complexing agent solution are continuously supplied to and reacted in a reactor equipped with stirring means and a reaction channel. As a result, a metal composite hydroxide represented by $Ni_aCo_b$-$Mn_c(OH)_2$ (in the formula, a + b + c = 1) is obtained.

[Each raw material]

The metal-containing aqueous solution, the pH-adjusting solution, and the complexing agent solution, which are raw material liquids that are used in the production of the precursor, will be described.

A nickel salt, which is the solute of the nickel salt solution, is not particularly limited, and, for example, any one or more of nickel sulfate, nickel nitrate, nickel chloride, and nickel acetate can be used.

As a cobalt salt that is a solute of the cobalt salt solution, for example, any one or more of cobalt sulfate, cobalt nitrate, cobalt chloride, and cobalt acetate can be used.

As a manganese salt that is a solute of the manganese salt solution, for example, any one or more of manganese sulfate, manganese nitrate, manganese chloride, and manganese acetate can be used.

The above-described metal salts are used in fractions corresponding to the composition ratio of the $Ni_aCo_bMn_c(OH)_2$. That is, the individual metal salts are used in amounts in which the mole ratio among Ni in the solute of the nickel salt solution, Co in the solute of the cobalt salt solution, and Mn in the solute of the manganese salt solution corresponds to the composition ratio of $Ni_aCo_bMn_c(OH)_2$ and satisfy a:b:c.

In addition, the solvents of the nickel salt solution, the cobalt salt solution, and the manganese salt solution are water.

As the pH-adjusting solution, an alkaline aqueous solution is used. As the alkaline aqueous solution, for example, a sodium hydroxide aqueous solution or a potassium hydroxide aqueous solution can be used.

The value of the pH in the present specification is defined as a value measured when the temperature of a reactant is 40°C. The pH of the liquid mixture is measured when the temperature of the reactant sampled from the reactor reaches 40°C.

In a case where the temperature of the sampled reactant is lower than 40°C, the pH is measured when the reactant has been heated to reach 40°C.

In a case where the temperature of the sampled reactant is lower than 40°C, the pH is measured when the reactant has been cooled to reach 40°C.

The complexing agent solution is a compound capable of form a complex with a nickel ion, a cobalt ion, and a manganese ion in an aqueous solution. As examples of a complexing agent, an ammonium ion feeder, hydrazine, ethylenediaminetetraacetic acid, nitrilotriacetic acid, uracil diacetic acid, and glycine are exemplary examples.

As the ammonium ion feeder, for example, ammonium salts such as ammonium hydroxide, ammonium sulfate, ammonium chloride, ammonium carbonate and ammonium fluoride can be used.

In addition, at the time of the reaction, the pH value in the reaction tank is controlled in a range of, for example, pH 9 or higher and pH 13 or lower and preferably pH 11 or higher and pH 13 or lower.

[Reaction means]

As the reactor equipped with stirring means and a reaction channel, for example, a reactor equipped with a Taylor reactor or a microreactor can be used. In addition, it is also possible to use a reactor such as a reaction tank in which the formed reaction precipitate is caused to overflow for separation. From the viewpoint of controlling the particle diameters ($D_{60}$, $D_{50}$, and $D_{10}$), it is preferable to use a device in which the shearing force of the stirring means is high. As such a device, for example, a Taylor reactor or microreactor is an exemplary example.

As a reactor that is used in a batch type coprecipitation method, a reaction tank not equipped with an overflow pipe can be used. Alternatively, it is also possible to use a device equipped with a condensation tank connected to an overflow pipe and having a mechanism in which a reaction precipitate that has overflowed is condensed in a condensation layer and again circulated to a reaction tank.

In the present embodiment, it is preferable to use reaction means equipped with a Taylor reactor. As the Taylor reactor, a Taylor vortex continuous stirred reactor can be suitably used.

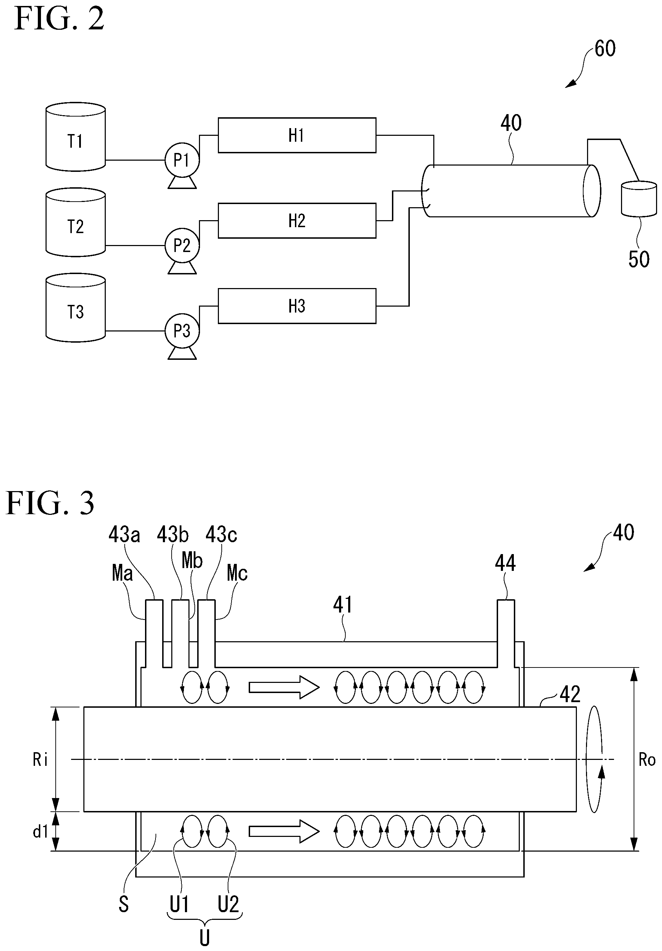

FIG. 2 shows a schematic view of an example of the reaction means equipped with a Taylor reactor. Reaction means 60 shown in FIG. 2 is equipped with a raw material liquid storage tank T1, a raw material liquid storage tank T2, a raw material liquid storage tank T3, a transport pump P1, a transport pump P2, a transport pump P3, a heat exchanger H1, a heat exchanger H2, a heat exchanger H3, a Taylor vortex continuous stirred reactor 40, and a reactant reservoir 50. The Taylor vortex continuous stirred reactor 40 will be hereinafter referred to as "reactor 40" in some cases.

In the raw material liquid storage tank T1, for example, a metal-containing aqueous solution containing Ni, Co, and Mn is stored. The metal-containing aqueous solution containing Ni, Co, and Mn is sent from the raw material liquid storage tank T1 to the reactor 40 with the transport pump P1. In a case where it is necessary to adjust the temperature of the metal-containing aqueous solution containing Ni, Co, and Mn, the temperature is adjusted with the heat exchanger H1.

In the raw material liquid storage tank T2, for example, a pH-adjusting solution is stored. The pH-adjusting solution is sent from the raw material liquid storage tank T2 to the reactor 40 with the transport pump P2. In a case where it is necessary to adjust the temperature of the pH-adjusting solution, the temperature is adjusted with the heat exchanger H2.

In the raw material liquid storage tank T3, for example, a complexing agent solution is stored. The complexing agent solution is sent from the raw material liquid storage tank T3 to the reactor 40 with the transport pump P3. In a case where it is necessary to adjust the temperature of the complexing agent solution, the temperature is adjusted with the heat exchanger H3.

The reaction means is not particularly limited to FIG. 2, and it is possible to use, for example, one or more storage tanks and one or more heat exchangers.

A reactant obtained by a reaction of the metal-containing aqueous solution containing Ni, Co, and Mn, the pH-adjusting solution, and the complexing agent solution in the reactor 40 is sent from the reactor 40 to the reactant storage tank 50.

FIG. 3 shows a schematic view of the cross section of the reactor 40. The reactor 40 is equipped with a cylinder 41 and stirring means 42. The cylinder 41 is a hollow cylindrical reaction vessel. The stirring means 42 has a cylindrical shape.

The stirring means 42 is disposed inside the cylinder 41 in a state of being not in contact with the cylinder 41. The cylinder 41 and the stirring means 42 form a coaxial double cylindrical structure. The stirring means 42 rotates in the circumferential direction of the rotating shaft, thereby stirring a fluid present in a reaction channel S.

The cylinder 41 is provided with one or more introduction openings for introducing the raw material liquid.

The cylinder 41 includes three introduction openings 43a, 43b, and 43c at one end portion. Furthermore, the cylinder 41 includes a discharge opening 44 for discharging the reactant at the other end portion.

For example, the introduction opening 43a, the introduction opening 43b, and the introduction opening 43c are each connected to the raw material storage tank T1, the raw material storage tank T2, and the raw material storage tank T3 through the transport pump and the heat exchanger.

When the raw material liquids are introduced into the reactor 40 from the introduction openings 43a, 43b, and 43c, the raw material liquids are mixed and reacted with each other in the reaction channel S in the vicinities of the introduction openings, and the obtained reactant is discharged from the discharge opening 44.

The individual raw material liquids introduced from the introduction openings are mixed and reacted with each other in the reaction channel S to become a reactant.

The reaction progresses in the reaction channel S, which is the gap between the cylinder 41 and the stirring means 42. When the cylinder 41 is fixed and only the stirring means 42 is rotated by a driving portion, not shown, the fluid flows to rotate along the rotating direction of the stirring means 42 in a spiral shape in the reaction channel S due to a centrifugal force and the Coriolis force. "Fluid" mentioned herein means a liquid mixture obtained by the mixing of the raw material liquids and the reactant obtained by the mixing and reaction of the individual raw material liquids.

This forms a plurality of annular vortexes U each made up of a first annular vortex U1 and a second annular vortex U2 in which the fluid regularly rotates along the stirring means 42 in opposite directions. The annular vortex U is referred to as the Taylor vortex. The annular vortexes U move in parallel without dispersing in the axial flow direction of the stirring means 42.

Due to the spiral flow of the Taylor vortexes, in the reaction channel S, the fluid is efficiently mixed, and heat is efficiently transferred.

A neutralization reaction occurs in the vicinities of the introduction openings 43a, 43b, and 43c, and a metal composite hydroxide is generated. While the metal composite hydroxide is generated and then the fluid is discharged from the discharge opening 44, the crystals of the metal composite hydroxide grow in the reaction channel S.

It is preferable to control the temperature of each raw material liquid in the vicinity of the introduction opening. Specifically, the temperatures of the individual raw material liquids are measured at, for example, temperature measurement positions indicated by symbols Ma, Mb, and Mc in FIG. 3.

The temperature of each raw material liquid is adjusted so as to satisfy a condition under which the difference between the maximum temperature and the minimum temperature at the temperature measurement position becomes 1.5°C or less.

The maximum temperature and minimum temperature are the maximum temperature and minimum temperature of each raw material liquid at the temperature measurement position. When the difference between the maximum temperature and the minimum temperature is adjusted to 1.5°C or less, the reaction immediately after each raw material liquid is introduced into the reaction channel S from the introduction opening can be stabilized, and thus it is possible to control the value of $D_{60}/D_{10}$ and BET specific surface area of the precursor to be within the ranges of the present embodiment.

The temperatures of the individual raw material liquids are adjusted with, for example, the heat exchangers H1, H2, and H3 shown in FIG. 2. The raw material liquids the temperature of which is adjusted are not particularly limited and may be any of the nickel, cobalt, manganese metal-containing aqueous solution, the pH-adjusting solution, and the complexing agent solution. In the present embodiment, the addition of the pH-adjusting solution initiates the reaction, so it is preferable to preferentially adjust the temperature of the pH-adjusting solution.

It is preferable to rotate the stirring means 42 under a condition where the Taylor number satisfies 60 or more and 20000 or less. The adjustment of the Taylor number makes it possible to control the value of $D_{10}/D_{50}$ of the precursor. Ta, which is the Taylor number, is calculated by the following formula.

[Math 1]

$$Ta = \frac{\omega R_i d \rho}{\mu} \sqrt{\frac{d}{R_i}} \times 10^{-6}$$

($R_i$ is the outer diameter (mm) of the stirring means 42, $\omega$ is the rotation speed (rad/s) of the stirring means 42, d is the distance (mm) between the inner wall surface of the cylinder 41 and the stirring means 42, $\mu$ is the viscosity of the fluid (Pa·s), and $\rho$ is the density of the fluid (kg/m$^3$))

The value of $D_{60}/D_{10}$ and the BET specific surface area of the precursor can be controlled by adjusting the gap width d1 that is a gap between the inner wall surface of the cylinder 41 and the stirring means 42 in the reactor 40. In order to control the value of $D_{60}/D_{10}$ and the BET specific surface area of the precursor to be within the ranges of the present embodiment, the gap width d1 is preferably adjusted within a range of 2 mm or more and 20 mm or less.

The rotation speed of the stirring means 42 is preferably 10 rad/s or faster and more preferably 25 rad/s or faster.

As the Taylor vortex continuous stirred reactor, for example, TVF-1 manufactured by Tipton Corp. can be used.

After the above-described reaction, the obtained reactant is washed with water and then dried, whereby a metal composite compound is obtained. A nickel cobalt manganese composite hydroxide as a nickel cobalt manganese composite compound is obtained. In a case where contaminants derived from the reactant remain when the reactant has been washed with water, the reactant may be washed with a weakly acidic aqueous solution or an alkaline aqueous solution containing sodium hydroxide or potassium hydroxide.

In a case where the particles of the metal composite compound are often cracked or chipped in the washing step or the drying step, the particles may be classified. As a classification method, for example, air classification or screen-type sorting using a sieve can be used.

In the above-described example, the nickel cobalt manganese composite hydroxide has been produced, but a nickel cobalt manganese composite oxide may be prepared.

For example, a nickel cobalt manganese composite oxide can be prepared by calcining the nickel cobalt manganese composite hydroxide in an oxygen-containing atmosphere. The maximum holding temperature is, for example, in a range of 350°C or higher and 800°C or lower. In the calcining time, the total time taken while the temperature begins to be raised and reaches the calcining temperature and the holding of the nickel cobalt manganese composite hydroxide at the calcining temperature ends is, for example, in a range of 1 hour or longer and 30 hours or shorter. The temperature rising rate in the heating step to reach the maximum holding temperature is, for example, 100 °C/hour or faster. In addition, as the atmosphere for the calcining, it is possible to use the atmosphere, oxygen, nitrogen, argon or a gas mixture thereof.

The highest holding temperature is the highest temperature of the holding temperature of the atmosphere in a calcining furnace in a calcining step and means the calcining temperature in the calcining step. In the case of a main calcining step having a plurality of heating steps, the highest holding temperature means the highest temperature in each heating step.

The temperature rising rate is calculated from the time taken while the temperature begins to be raised and reaches the highest holding temperature in a calcining device and a temperature difference between the temperature in the calcining furnace of the calcining device at the time of beginning to raise the temperature and the highest holding temperature.

<Method for producing lithium metal composite oxide>

A method for producing a lithium metal composite oxide is a method for producing LiMO having a mixing step of mixing the precursor obtained by the method for producing the precursor and a lithium compound and a calcining step of calcining the obtained mixture. The use of the precursor makes it possible to produce LiMO having $D_{60}/D_{10}$ and a BET specific surface area within the ranges of the present embodiment.

[Mixing step]

The present step is a step of mixing the precursor and a lithium compound to obtain a mixture.

As the lithium compound, it is possible to use any one of lithium carbonate, lithium nitrate, lithium acetate, lithium hydroxide, lithium oxide, lithium chloride, and lithium fluoride or a mixture of two or more thereof. Among these, any one or both of lithium hydroxide and lithium carbonate are preferable.

The method for mixing the precursor and the lithium compound will be described.

The precursor and the lithium compound are mixed in consideration of the composition ratio of a final target product. For example, in the case of using a nickel cobalt manganese metal composite compound, the nickel cobalt manganese metal composite compound and the lithium compound are used in fractions that correspond to the composition ratio of $Li[Li_m(Ni_aCo_bMn_c)_{1-m}]O_2$ (a + b + c = 1). In addition, in a case where Li is excessive (the mole ratio of Li contained is more than 1) in LiMO, which is the final target product, the lithium compound is mixed in a fraction at which the mole ratio of Li that is contained in the lithium compound to the metal element that is contained in the metal composite compound becomes a ratio of more than 1.

The mixture of the nickel cobalt manganese composite compound and the lithium compound is calcined, whereby a lithium nickel cobalt manganese composite oxide is obtained. In the calcining, a dry air, an oxygen-containing atmosphere, an inert atmosphere, or the like is used depending on a desired composition, and a plurality of heating steps is carried out as necessary.

In the present embodiment, the mixture may be calcined in the presence of an inert melting agent. Calcining in the presence of an inert melting agent makes it possible to accelerate the reaction of the mixture. The inert melting agent may remain in the calcined LiMO or may be removed by being washed with water or an alcohol after the calcining. In the present embodiment, the calcined LiMO is preferably washed with water or an alcohol.

The particle diameters of LiMO to be obtained can be controlled by adjusting the holding temperature in the calcining.

The calcining step may be only one time of calcining or may have a plurality of calcining stages.

In a case where the calcining step has a plurality of calcining stages, a step in which the mixture is calcined at the highest temperature is referred to as the main calcining. Prior to the main calcining, a preliminary calcining in which the mixture is calcined at a lower temperature than in the main calcining may be carried out. In addition, after the main calcining, a post calcining in which the mixture is calcined at a lower temperature than in the main calcining may be carried out.

The calcining temperature (highest holding temperature) in the main calcining is preferably 600°C or higher, more preferably 650°C or higher, and particularly preferably 700°C or higher from the viewpoint of accelerating the growth of the LiMO particles. In addition, from the viewpoint of preventing cracks from being formed in the LiMO particles and maintaining the strength of the LiMO particles, the calcining temperature is preferably 1200°C or lower, more preferably 1100°C or lower, and particularly preferably 1000°C or lower.

The upper limit value and lower limit value of the highest holding temperature in the main calcining can be randomly combined together.

As the combination, 600°C or higher and 1200°C or lower, 650°C or higher and 1100°C or lower, and 700°C or higher and 1000°C or lower are exemplary examples.

The calcining temperature in the preliminary calcining or the post calcining may be lower than the calcining temperature in the main calcining, and, for example, a range of 350°C or higher and 700°C or lower is an exemplary example.

As the maximum holding temperature becomes higher, there is a tendency that the particle diameters of the LiMO particles become larger and the BET specific surface area becomes smaller. The adjustment of the maximum holding temperature makes it possible to adjust the particle diameters or the BET specific surface area of LiMO, the value of $\alpha/\beta$, and the like. The holding temperature in the calcining may be appropriately adjusted depending on the kind of a transition metal element used and the kinds and amounts of a precipitant and the inert melting agent.

The holding temperature may be set in consideration of the melting point of the inert melting agent, which will be described below, and is preferably set in a range of the melting point of the inert melting agent minus 200°C or higher and the melting point of the inert melting agent plus 200°C or lower.

In addition, as the time during which the mixture is held at the holding temperature, 0.1 hour or longer and 20 hours or shorter is an exemplary example, and 0.5 hours or longer and 10 hours or shorter is preferable. The temperature rising rate up to the holding temperature is usually 50 °C/hour or faster and 400 °C/hour or slower, and the temperature lowering rate from the holding temperature to room temperature is usually 10 °C/hour or faster and 400 °C/hour or slower. In addition, as the atmosphere for the calcining, it is possible to use the atmosphere, oxygen, nitrogen, argon or a gas mixture thereof.

LiMO obtained by calcining is pulverized, then appropriately classified, and made into CAM that can be applied to lithium secondary batteries.

The inert melting agent is not particularly limited as long as the inert melting agent does not easily react with the mixture during the calcining. In the present embodiment, one or more selected from the group consisting of a fluoride of one or more elements selected from the group consisting of Na, K, Rb, Cs, Ca, Mg, Sr, and Ba (hereinafter, referred to as "A"), a chloride of A, a carbonate of A, a sulfate of A, a nitrate of A, a phosphate of A, a hydroxide of A, a molybdate of A, and A of tungstate are exemplary examples.

As the fluoride of A, NaF (melting point: 993°C), KF (melting point: 858°C), RbF (melting point: 795°C), CsF (melting point: 682°C), $CaF_2$ (melting point: 1402°C), $MgF_2$ (melting point: 1263°C), $SrF_2$ (melting point: 1473°C), and

$BaF_2$ (melting point: 1355°C) can be exemplary examples.

As the chloride of A, NaCl (melting point: 801°C), KCl (melting point: 770°C), RbCl (melting point: 718°C), CsCl (melting point: 645°C), CaCh (melting point: 782°C), $MgCl_2$ (melting point: 714°C), $SrCl_2$ (melting point: 857°C), and BaCh (melting point: 963°C) can be exemplary examples.

As the carbonate of A, $Na_2CO_3$ (melting point: 854°C), $K_2CO_3$ (melting point: 899°C), $Rb_2CO_3$ (melting point: 837°C), $Cs_2CO_3$ (melting point: 793°C), $CaCO_3$ (melting point: 825°C), $MgCO_3$ (melting point: 990°C), $SrCO_3$ (melting point: 1497°C), and $BaCO_3$ (melting point: 1380°C) can be exemplary examples.

As the sulfate of A, $Na_2SO_4$ (melting point: 884°C), $K_2SO_4$ (melting point: 1069°C), $Rb_2SO_4$ (melting point: 1066°C), $Cs_2SO_4$ (melting point: 1005°C), $CaSO_4$ (melting point: 1460°C), $MgSO_4$ (melting point: 1137°C), $SrSO_4$ (melting point: 1605°C), and $BaSO_4$ (melting point: 1580°C) can be exemplary examples.

As the nitrate of A, $NaNO_3$ (melting point: 310°C), $KNO_3$ (melting point: 337°C), $RbNO_3$ (melting point: 316°C), $CsNO_3$ (melting point: 417°C), $Ca(NO_3)_2$ (melting point: 561°C), $Mg(NO_3)_2$, $Sr(NO_3)_2$ (melting point: 645°C), and $Ba(NO_3)_2$ (melting point: 596°C) can be exemplary examples.

As the phosphate of A, $Na_3PO_4$, $K_3PO_4$ (melting point: 1340°C), $Rb_3PO_4$, $Cs_3PO_4$, $Ca_3(PO_4)_2$, $Mg_3(PO_4)_2$, (melting point: 1184°C), $Sr_3(PO_4)_2$ (melting point: 1727°C), and $Ba_3(PO_4)_2$ (melting point: 1767°C) can be exemplary examples.

As the hydroxide of A, NaOH (melting point: 318°C), KOH (melting point: 360°C), RbOH (melting point: 301°C), CsOH (melting point: 272°C), $Ca(OH)_2$ (melting point: 408°C), $Mg(OH)_2$ (melting point: 350°C), $Sr(OH)_2$ (melting point: 375°C), and $Ba(OH)_2$ (melting point: 853°C) can be exemplary examples.

As the molybdate of A, $Na_2MoO_4$ (melting point: 698°C), $K_2MoO_4$ (melting point: 919°C), $Rb_2MoO_4$ (melting point: 958°C), $Cs_2MoO_4$ (melting point: 956°C), $CaMoO_4$ (melting point: 1520°C), $MgMoO_4$ (melting point: 1060°C), $SrMoO_4$ (melting point: 1040°C), and $BaMoO_4$ (melting point: 1460°C) can be exemplary examples.

As the tungstate of A, $Na_2WO_4$ (melting point: 687°C), $K_2WO_4$, $Rb_2WO_4$, $Cs_2WO_4$, $CaWO_4$, $MgWO_4$, $SrWO_4$, and $BaWO_4$ can be exemplary examples.

Two or more of these inert melting agents can also be used. In the case of using two or more kinds of inert melting agents, there is also a case where the melting point of all of the inert melting agents decreases.

In addition, among these inert melting agents, as an inert melting agent for obtaining LiMO having higher crystallinity, a salt of one or more selected from the group consisting of the carbonate of A, the sulfate of A, and the chloride of A is preferable.

In addition, A is preferably any one or both of Na and K.

That is, among the above-described inert melting agents, a particularly preferable inert melting agent is one or more selected from the group consisting of NaCl, KCl, $Na_2CO_3$, $K_2CO_3$, $Na_2SO_4$, and $K_2SO_4$, and any one or both of $K_2SO_4$ and $Na_2SO_4$ are more preferably used.

The abundance of the inert melting agent during the calcining may be appropriately selected. As an example, the abundance of the inert melting agent during the calcining is preferably 0.1 parts by mass or more and more preferably 1 part by mass or more with respect to 100 parts by mass of the lithium compound. In addition, in a case where there is a need to accelerate the growth of the particles, an inert melting agent other than the inert melting agents exemplified above may be jointly used. As the inert melting agent that is used in this case, ammonium salts such as $NH_4Cl$ and $NH_4F$ are exemplary examples.

<CAM>

CAM of the present embodiment contains LiMO of the present embodiment. CAM of the present embodiment may contain LiMO other than LiMO of the present embodiment.

<Lithium secondary battery>

Next, CAM in which LiMO of the present embodiment is used, a positive electrode in which this CAM is used, and a lithium secondary battery having this positive electrode will be described while describing the configuration of the lithium secondary battery.

CAM is preferably composed of LiMO of the present embodiment, but may contain other components as long as the effects of the present invention are not impaired.

An example of the lithium secondary battery has a positive electrode, a negative electrode, a separator interposed between the positive electrode and the negative electrode, and an electrolyte solution disposed between the positive electrode and the negative electrode.

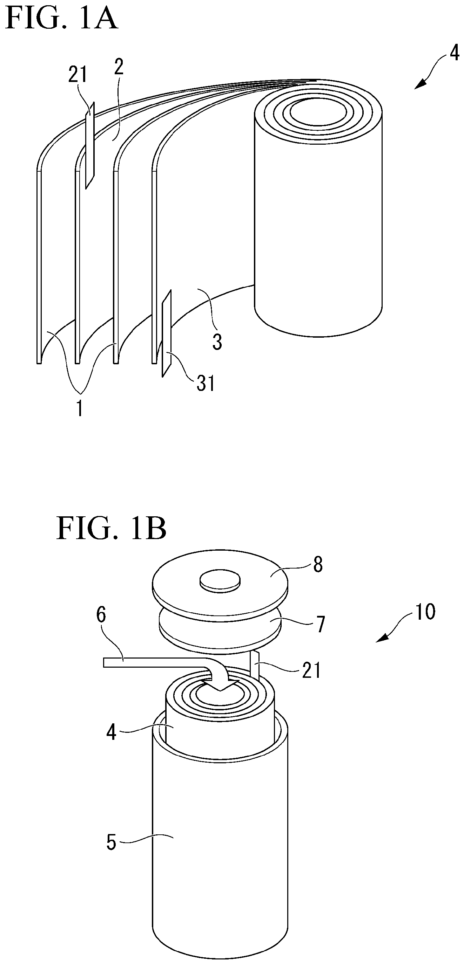

FIG. 1A and FIG. 1B are schematic views illustrating an example of the lithium secondary battery of the present embodiment. A cylindrical lithium secondary battery 10 of the present embodiment is produced as described below.

First, as illustrated in FIG. 1A, a pair of separators 1 having a strip shape, a strip-shaped positive electrode 2 having a positive electrode lead 21 at one end, and a strip-shaped negative electrode 3 having a negative electrode lead 31 at one end are laminated in order of the separator 1, the positive electrode 2, the separator 1, and the negative electrode 3 and are wound to form an electrode group 4.

Next, as shown in FIG. 1B, the electrode group 4 and an insulator, not shown, are accommodated in a battery can 5, and then the can bottom is sealed. The electrode group 4 is impregnated with an electrolyte solution 6, and an electrolyte is disposed between the positive electrode 2 and the negative electrode 3. Furthermore, the upper portion of the battery can 5 is sealed with a top insulator 7 and a sealing body 8, whereby the lithium secondary battery 10 can be produced.

As the shape of the electrode group 4, a columnar shape in which the cross-sectional shape becomes a circle, an ellipse, a rectangle, or a rectangle with rounded corners when the electrode group 4 is cut in a direction perpendicular to the winding axis is an exemplary example.

In addition, as the shape of a lithium secondary battery having such an electrode group 4, a shape that is specified by IEC60086, which is a standard for batteries specified by the International Electrotechnical Commission (IEC) or by JIS C 8500 can be adopted. Shapes such as a cylindrical shape and a square shape can be exemplary examples.

Furthermore, the lithium secondary battery is not limited to the winding-type configuration and may have a lamination-type configuration in which the laminated structure of the positive electrode, the separator, the negative electrode, and the separator is repeatedly overlaid. As the lamination-type lithium secondary battery, it is possible to exemplify a so-called coin-type battery, a button-type battery, and a paper-type (or sheet-type) battery.

Hereinafter, each configuration will be described in order.

(Positive electrode)

A positive electrode of the present embodiment can be manufactured by first adjusting a positive electrode mixture containing CAM, a conductive material, and a binder, and causing a positive electrode current collector to support the positive electrode mixture.

(Conductive material)

As the conductive material in the positive electrode, a carbon material can be used. As the carbon material, graphite powder, carbon black (for example, acetylene black), a fibrous carbon material, and the like can be exemplary examples.

The fraction of the conductive material in the positive electrode mixture is preferably 5 parts by mass or more and 20 parts by mass or less with respect to 100 parts by mass of CAM. In the case of using a fibrous carbon material such as a graphitized carbon fiber or a carbon nanotube as the conductive material, it is also possible to decrease the fraction.

(Binder)

As the binder in the positive electrode, a thermoplastic resin can be used. As the thermoplastic resin, polyimide resins; fluororesins such as polyvinylidene fluoride (hereinafter, referred to as PVdF in some cases) and polytetrafluoroethylene; polyolefin resins such as polyethylene and polypropylene, and the resins described in WO 2019/098384A1 or US2020/0274158A1 can be exemplary examples.

Two or more of these thermoplastic resins may be used in a mixture form. When a fluororesin and a polyolefin resin are used as the binder, the fraction of the fluororesin to the entire positive electrode mixture is set to 1 mass% or more and 10 mass% or less, and the fraction of the polyolefin resin is set to 0.1 mass% or more and 2 mass% or less, whereby it is possible to obtain a positive electrode mixture having both a high adhesive force to the positive electrode current collector and a high bonding force inside the positive electrode mixture.

(Positive electrode current collector)

As the positive electrode current collector in the positive electrode, a strip-shaped member formed of a metal material such as aluminum, nickel, or stainless steel as a forming material can be used. Particularly, a positive electrode current collector that is formed of Al and has a thin film shape is preferable since the positive electrode current collector is easy to process and inexpensive.

As the method for supporting the positive electrode mixture by the positive electrode current collector, a method in which the positive electrode mixture is formed by pressurization on the positive electrode current collector is an exemplary example. In addition, the positive electrode mixture may be supported by the positive electrode current collector by preparing a paste of the positive electrode mixture using an organic solvent, applying and drying the paste of the positive electrode mixture to be obtained on at least one surface side of the positive electrode current collector, and fixing the positive electrode mixture by pressing.

As the organic solvent that can be used in the case of preparing the paste of the positive electrode mixture, an amine-based solvent such as N,N-dimethylaminopropylamine or diethylenetriamine; an ether-based solvent such as tetrahydrofuran; a ketone-based solvent such as methyl ethyl ketone; an ester-based solvent such as methyl acetate; and an amide-based solvent such as dimethylacetamide or N-methyl-2-pyrrolidone (hereinafter, referred to as NMP in some cases) are exemplary examples.

As the method for applying the paste of the positive electrode mixture to the positive electrode current collector, a slit die coating method, a screen coating method, a curtain coating method, a knife coating method, a gravure coating method, and an electrostatic spraying method are exemplary examples.

The positive electrode can be produced by the method exemplified above.

(Negative electrode)

The negative electrode in the lithium secondary battery needs to be a material which can be doped with lithium ions and from which lithium ions can be de-doped at a potential lower than that of the positive electrode, and an electrode in which a negative electrode mixture containing a negative electrode active material is supported by a negative electrode current collector and an electrode formed of a negative electrode active material alone are exemplary examples.

(Negative electrode active material)

As the negative electrode active material in the negative electrode, materials which are a carbon material, a chalcogen compound (oxide, sulfide, or the like), a nitride, a metal, or an alloy and can be doped with lithium ions and from which lithium ions can be de-doped at a lower potential than the positive electrode are exemplary examples.

As the carbon material that can be used as the negative electrode active material, graphite such as natural graphite and artificial graphite, cokes, carbon black, pyrolytic carbons, a carbon fiber, and a calcined product of an organic polymer compound can be exemplary examples.

As oxides that can be used as the negative electrode active material, oxides of silicon represented by a formula $SiO_x$ (here, x is a positive real number) such as $SiO_2$ and SiO; oxides of tin represented by a formula $SnO_x$ (here, x is a positive real number) such as SnOz and SnO; and metal composite oxides containing Li and Ti or V such as $Li_4Ti_5O_{12}$ and $LiVO_2$ can be exemplary examples.

In addition, as the metal that can be used as the negative electrode active material, lithium metal, silicon metal, tin metal, and the like can be exemplary examples.

As a material that can be used as the negative electrode active material, the materials described in WO 2019/098384A1 or US2020/0274158A1 may be used.

In addition, as the metal that can be used as the negative electrode active material, lithium metal, silicon metal, tin metal, and the like can be exemplary examples.

As the alloy that can be used as the negative electrode active material, lithium alloys such as Li-Al, Li-Ni, Li-Si, Li-Sn, and Li-Sn-Ni; silicon alloys such as Si-Zn; tin alloys such as Sn-Mn, Sn-Co, Sn-Ni, Sn-Cu, and Sn-La; and alloys such as $Cu_2Sb$ and $La_3Ni_2Sn_7$ can be exemplary examples.

These metals and alloys can be used as an electrode, mainly, singly after being processed into, for example, a foil shape.

Among the above-described negative electrode active materials, the carbon material containing graphite such as natural graphite or artificial graphite as a main component is preferably used for the reason that the potential of the negative electrode rarely changes (the potential flatness is favorable) from a uncharged state to a fully-charged state during charging, the average discharging potential is low, the capacity retention rate at the time of repeatedly charging and discharging the lithium secondary battery is high (the cycle characteristics are favorable), and the like. The shape of the carbon material may be, for example, any of a flaky shape such as natural graphite, a spherical shape such as mesocarbon microbeads, a fibrous shape such as a graphitized carbon fiber, or an aggregate of fine powder.

The negative electrode mixture may contain a binder as necessary. As the binder, thermoplastic resins can be exemplary examples, and specifically, PVdF, thermoplastic polyimide, carboxymethylcellulose (hereinafter, referred to as CMC in some cases), styrene-butadiene rubber (hereinafter, referred to as SBR in some cases), polyethylene, and polypropylene can be exemplary examples.

(Negative electrode current collector)

As the negative electrode current collector in the negative electrode, a strip-shaped member formed of a metal material such as copper, nickel, or stainless steel as the forming material can be an exemplary example. Particularly, a negative electrode current collector that is formed of Cu and has a thin film shape is preferable since the negative electrode current collector does not easily produce an alloy with lithium and is easy to process.

As the method for supporting the negative electrode mixture by the negative electrode current collector, similarly to the case of the positive electrode, a method in which the negative electrode mixture is formed by pressurization and a method in which a paste of the negative electrode mixture is prepared using a solvent or the like, applied and dried on the negative electrode current collector, and then the negative electrode mixture is compressed by pressing are exemplary examples.

(Separator)

As the separator in the lithium secondary battery, it is possible to use, for example, a material that is made of a material such as a polyolefin resin such as polyethylene or polypropylene, a fluororesin, or a nitrogen-containing aromatic polymer and has a form such as a porous film, a non-woven fabric, or a woven fabric. In addition, the separator may be formed using two or more of these materials or the separator may be formed by laminating these materials. In addition, the separators described in JP-A-2000-030686 or US20090111025A1 may be used.

The air resistance of the separator by the Gurley method specified by JIS P 8117 is preferably 50 sec/100 cc or more and 300 sec/100 cc or less and more preferably 50 sec/100 cc or more and 200 sec/100 cc or less in order to favorably transmit the electrolyte while the battery is in use (while the battery is being charged and discharged).

In addition, the porosity of the separator is preferably 30 vol% or more and 80 vol% or less and more preferably 40 vol% or more and 70 vol% or less. The separator may be a laminate of separators having different porosities.

(Electrolyte solution)

The electrolyte solution in the lithium secondary battery contains an electrolyte and an organic solvent.

As the electrolyte that is contained in the electrolyte solution, lithium salts such as $LiClO_4$, $LiPF_6$, and $LiBF_4$ are exemplary examples, and a mixture of two or more thereof may be used. In addition, the electrolytes described in WO 2019/098384A1 or US2020/0274158A1 may be used. Among these, as the electrolyte, at least one selected from the group consisting of $LiPF_6$, $LiAsF_6$, $LiSbF_6$, $LiBF_4$, $LiCF_3SO_3$, $LiN(SO_2CF_3)_2$, and $LiC(SO_2CF_3)_3$, which contain fluorine, is preferably used.

As the organic solvent that is contained in the electrolyte solution, for example, propylene carbonate, ethylene carbonate, dimethyl carbonate, diethyl carbonate, ethyl methyl carbonate, and the organic solvents described in WO 2019/098384A1 or US2020/0274158A1 can be used.

As the organic solvent, two or more of these are preferably mixed and used, and a solvent mixture of a cyclic carbonate and a non-cyclic carbonate and a solvent mixture of a cyclic carbonate and ethers are more preferable. As the solvent mixture of a cyclic carbonate and a non-cyclic carbonate, a solvent mixture containing ethylene carbonate, dimethyl carbonate, and ethyl methyl carbonate is preferable.

In addition, as the electrolyte solution, it is preferable to use an electrolyte solution containing a lithium salt containing fluorine such as $LiPF_6$ and an organic solvent having a fluorine substituent since the safety of lithium secondary batteries to be obtained is enhanced.

Since LiMO of the present embodiment is used in CAM having such a configuration, it is possible to improve the cycle retention rate of lithium secondary batteries for which CAM is used.

In addition, since positive electrodes having the above-described configuration have CAM having the above-described configuration, it is possible to improve the cycle retention rates of lithium secondary batteries.

Furthermore, the lithium secondary battery having the above-described configuration has the above-described positive electrode and thus becomes a secondary battery having a high cycle retention rate.

<All-solid-state lithium-ion secondary battery>

Next, a positive electrode for which LiMO of the present embodiment is used as CAM for an all-solid-state lithium-ion secondary battery and an all-solid-state lithium-ion secondary battery having this positive electrode will be described while describing the configuration of the all-solid-state lithium-ion secondary battery.

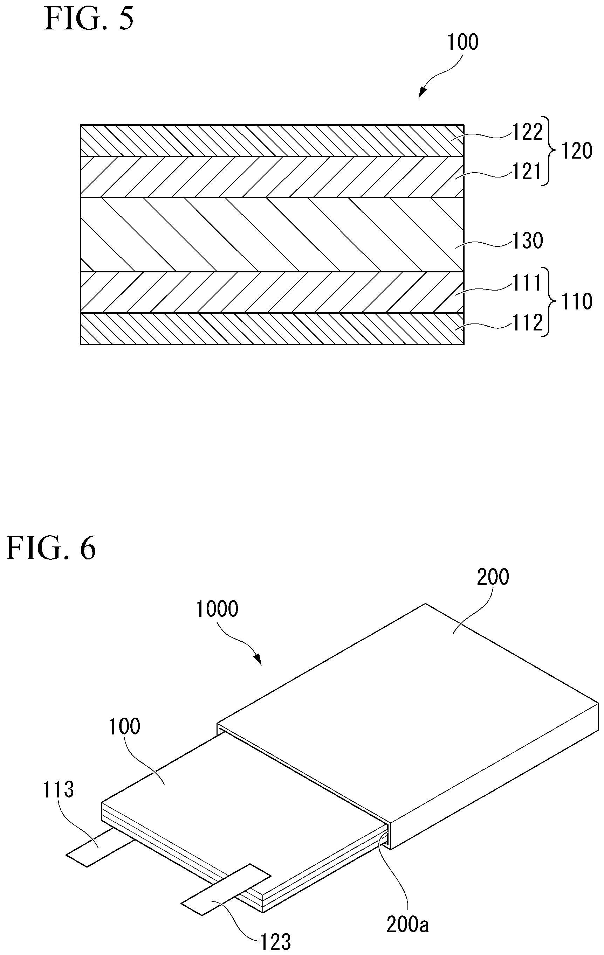

FIGS. 5 and 6 are schematic views showing an example of the all-solid-state lithium-ion secondary battery. FIG. 5 is a schematic view showing a laminate that the all-solid-state lithium-ion secondary battery includes. FIG. 6 is a schematic view showing an entire configuration of the all-solid-state lithium-ion secondary battery.

An all-solid-state lithium-ion secondary battery 1000 has a laminate 100 having a positive electrode 110, a negative electrode 120, and a solid electrolyte layer 130 and an exterior body 200 accommodating the laminate 100. In addition, the all-solid-state lithium secondary battery 1000 may have a bipolar structure in which a CAM and a negative electrode active material are disposed on both sides of a current collector. As specific examples of the bipolar structure, for example, the structures described in JP-A-2004-95400 are exemplary examples.

A material that configures each member will be described below.

The laminate 100 may have an external terminal 113 that is connected to a positive electrode current collector 112 and an external terminal 123 that is connected to a negative electrode current collector 122.

In the laminate 100, the positive electrode 110 and the negative electrode 120 interpose the solid electrolyte layer 130 so as not to short-circuit each other. In addition, the all-solid-state lithium-ion secondary battery 1000 may have a separator, which has been used in conventional liquid-based lithium ion secondary batteries, between the positive electrode 110 and the negative electrode 120 to prevent a short circuit between the positive electrode 110 and the negative electrode 120.

The all-solid-state lithium-ion secondary battery 1000 has an insulator, not shown, that insulates the laminate 100 and the exterior body 200 from each other or a sealant, not shown, that seals an opening portion 200a of the exterior body 200.

As the exterior body 200, a container formed of a highly corrosion-resistant metal material such as aluminum, stainless steel or nickel-plated steel can be used. In addition, a container obtained by processing a laminate film having at least one surface on which a corrosion resistant process has been carried out into a bag shape can also be used.

As the shape of the all-solid-state lithium-ion secondary battery 1000, for example, shapes such as a coin type, a button type, a paper type (or a sheet type), a cylindrical type, and a square type can be exemplary examples.

The all-solid-state lithium-ion secondary battery 1000 is shown in the drawings to have one laminate 100, but is not limited thereto. The all-solid-state lithium-ion secondary battery 1000 may have a configuration in which the laminate 100 is used as a unit cell and a plurality of unit cells (laminates 100) is sealed inside the exterior body 200.

Hereinafter, each configuration will be described in order.

(Positive electrode)

The positive electrode 110 has a positive electrode active material layer 111 and a positive electrode current collector 112.

The positive electrode active material layer 111 contains CAM. In addition, the positive electrode active material layer 111 may contain a solid electrolyte, a conductive material, and a binder.

(Solid electrolyte)

As the solid electrolyte that is contained in the positive electrode active material layer 111, a solid electrolyte that has lithium ion conductivity and used in well-known all-solid-state batteries can be adopted. As the solid electrolyte, an inorganic electrolyte and an organic electrolyte can be exemplary examples. As the inorganic electrolyte, an oxide-based solid electrolyte, a sulfide-based solid electrolyte, and a hydride-based solid electrolyte can be exemplary examples. As the organic electrolyte, polymer-based solid electrolytes are exemplary examples. As each electrolyte, the compounds described in WO 2020/208872A1, US2016/0233510A1, US2012/0251871A1, and US2018/0159169A1 are exemplary examples, and examples thereof include the following compounds.

(Oxide-based solid electrolyte)

As the oxide-based solid electrolyte, for example, a perovskite-type oxides, a NASICON-type oxide, a LISICON-type oxide, a garnet-type oxides, and the like are exemplary examples. Specific examples of each oxide include the compounds described in WO 2020/208872A1, US2016/0233510A1, and US2020/0259213A1.

As the garnet-type oxide, Li-La-Zr-based oxides such as $Li_7La_3Zr_2O_{12}$ (LLZ) are exemplary examples.

The oxide-based solid electrolyte may be a crystalline material or an amorphous (amorphous) material. As the amorphous (amorphous) solid electrolyte, for example, Li-B-O compounds such as $Li_3BO_3$, $Li_2B_4O_7$, and $LiBO_2$ are exemplary examples. The oxide-based solid electrolyte preferably contains an amorphous material.

(Sulfide-based solid electrolyte)

As the sulfide-based solid electrolyte, $Li_2S$-$P_2S_5$-based compounds, $Li_2S$-$SiS_2$-based compounds, $Li_2S$-$GeS_2$-based compounds, $Li_2S$-$B_2S_3$-based compounds, LiI-$Si_2S$-$P_2S_5$-based compounds, LiI-$Li_2S$-$P_2O_5$-based compounds, LiI-$Li_3PO_4$-$P_2S_5$-based compounds, $Li_{10}GeP_2Si_2$, and the like can be exemplary examples.

In the present specification, the expression "-based compound" that indicates the sulfide-based solid electrolyte is used as a general term for solid electrolytes mainly containing a raw material written before "-based compound" such as "$Li_2S$" or "$P_2S_5$". For example, the $Li_2S$-$P_2S_5$-based compounds include solid electrolytes containing $Li_2S$ and $P_2S_5$

and further containing a different raw material. In addition, the $Li_2S$-$P_2S_5$-based compounds also include solid electrolytes containing $Li_2S$ and $P_2S_5$ in different mixing ratios.

As the $Li_2S$-$P_2S_5$-based compounds, $Li_2S$-$P_2S_5$, $Li_2S$-$P_2S_5$-LiI, $Li_2S$-$P_2S_5$-LiCl, $Li_2S$-$P_2S_5$-LiBr, $Li_2S$-$P_2S_5$-LiI-LiBr, and the like can be exemplary examples.

As the $Li_2S$-$SiS_2$-based compounds, $Li_2S$-$SiS_2$, $Li_2S$-$SiS_2$-LiI, $Li_2S$-$SiS_2$-LiBr, $Li_2S$-$SiS_2$-LiCl, $Li_2S$-$SiS_2$-$B_2S_3$-LiI, $Li_2S$-$SiS_2$-$P_2S_5$-LiI, $Li_2S$-$SiS_2$-$P_2S_5$-LiCl, and the like are exemplary examples.

As the $Li_2S$-$P_2S_5$-based compounds, $Li_2S$-$P_2S_5$, $Li_2S$-$P_2S_5$-LiI, $Li_2S$-$P_2S_5$-LiCl, $Li_2S$-$P_2S_5$-LiBr, $Li_2S$-$P_2S_5$-LiI-LiBr, and the like can be exemplary examples.

As the $Li_2S$-$SiS_2$-based compounds, $Li_2S$-$SiS_2$, $Li_2S$-$SiS_2$-LiI, $Li_2S$-$SiS_2$-LiBr, $Li_2S$-$SiS_2$-LiCl, $Li_2S$-$SiS_2$-$B_2S_3$-LiI, $Li_2S$-$SiS_2$-$P_2S_5$-LiI, $Li_2S$-$SiS_2$-$P_2S_5$-LiCl, and the like are exemplary examples.

As the $Li_2S$-$GeS_2$-based compounds, $Li_2S$-$GeS_2$, $Li_2S$-$GeS_2$-$P_2S_5$, and the like are exemplary examples.

The sulfide-based solid electrolyte may be a crystalline material or an amorphous (amorphous) material. The sulfide-based solid electrolyte preferably contains an amorphous material.

Two or more solid electrolytes can be jointly used as long as the effect of the invention is not impaired.

(Conductive material and binder)

As the conductive material that the positive electrode active material layer 111 has, the materials described in the above-described (conductive material) can be used. In addition, as for the fraction of the conductive material in the positive electrode mixture, the fractions described in the above-described (conductive material) can be applied in the same manner. In addition, as the binder that the positive electrode has, the materials described in the above-described (binder) can be used.

(Positive electrode current collector)

As the positive electrode current collector 112 that the positive electrode 110 has, the materials described in the above-described (positive electrode current collector) can be used.

As a method for supporting the positive electrode active material layer 111 by the positive electrode current collector 112, a method in which the positive electrode active material layer 111 is formed by pressurization on the positive electrode current collector 112 is an exemplary example. A cold press or a hot press can be used for the pressurization.

In addition, the positive electrode active material layer 111 may be supported by the positive electrode current collector 112 by preparing a paste of a mixture of the positive electrode active material, the solid electrolyte, the conductive material, and the binder using an organic solvent to produce a positive electrode mixture, applying and drying the positive electrode mixture to be obtained on at least one surface of the positive electrode current collector 112, and fixing the positive electrode mixture by pressing.

In addition, the positive electrode active material layer 111 may be supported by the positive electrode current collector 112 by preparing a paste of a mixture of the CAM, the solid electrolyte, and the conductive material using an organic solvent to produce a positive electrode mixture, applying and drying the positive electrode mixture to be obtained on at least one surface of the positive electrode current collector 112, and calcining the positive electrode mixture.

As the organic solvent that can be used for the positive electrode mixture, the same organic solvent as the organic solvent that can be used in the case of preparing the paste of the positive electrode mixture described in the above-described (positive electrode current collector) can be used.

As a method for applying the positive electrode mixture to the positive electrode current collector 112, for example, a slit die coating method, a screen coating method, a curtain coating method, a knife coating method, a gravure coating method, and an electrostatic spraying method are exemplary examples.

The positive electrode 110 can be produced by the method exemplified above.

(Negative electrode)

The negative electrode 120 has a negative electrode active material layer 121 and the negative electrode current collector 122. The negative electrode active material layer 121 contains a negative electrode active material. In addition, the negative electrode active material layer 121 may contain a solid electrolyte and a conductive material. As the negative electrode active material, the negative electrode current collector, the solid electrolyte, the conductive material, and a binder, those described above can be used.

(Solid electrolyte layer)

The solid electrolyte layer 130 has the above-described solid electrolyte.

The solid electrolyte layer 130 can be formed by depositing a solid electrolyte of an inorganic substance on the surface of the positive electrode active material layer 111 in the above-described positive electrode 110 by a sputtering method.

In addition, the solid electrolyte layer 130 can be formed by applying and drying a paste-like mixture containing a solid electrolyte on the surface of the positive electrode active material layer 111 in the above-described positive electrode 110. The solid electrolyte layer 130 may be formed by pressing the dried paste-form mixture and further pressurizing the paste-form mixture by a cold isostatic pressure method (CIP).

The laminate 100 can be produced by laminating the negative electrode 120 on the solid electrolyte layer 130 provided on the positive electrode 110 as described above using a well-known method in an aspect that the negative electrode electrolyte layer 121 comes into contact with the surface of the solid electrolyte layer 130.

Since positive electrodes having the above-described configuration have CAM, it is possible to improve the cycle retention rates of all-solid-state lithium-ion batteries.

The present invention further includes the following aspects.

[13] A method for producing a precursor for a lithium secondary battery positive electrode active material, including the following step (A), step (B), step (C), and step (D).

Step (A): A step of preparing reaction means equipped with a cylinder having a hollow interior, stirring means disposed inside the cylinder and separated from an inner wall surface of the cylinder, and one or more raw material liquid storage tanks for storing raw material liquids. Here, the cylinder and the stirring means form a coaxial double cylindrical structure, and a reaction channel is provided between the cylinder and the stirring means.

Step (B): A step of loading a metal-containing aqueous solution, a pH-adjusting solution, and a complexing agent solution, which are the raw material liquids, into the raw material liquid storage tanks.

Step (C): A step of adjusting a difference between a maximum temperature and a minimum temperature to 1.5°C or less in vicinities of introduction openings of the metal-containing aqueous solution, the pH-adjusting solution, and the complexing agent solution into the reaction channel.

Step (D): A step of sending each of the metal-containing aqueous solution, the pH-adjusting solution, and the complexing agent solution, which are each loaded into the raw material liquid storage tank, to the reaction channel with a transport pump, and rotating the stirring means to mix and react the metal-containing aqueous solution, the pH-adjusting solution, and the complexing agent solution in the reaction channel to obtain a reactant.

When the precursor for the lithium secondary battery positive electrode active material is measured with a laser diffraction type particle size distribution measuring instrument and all in an obtained cumulative particle size distribution curve is set to 100%, a value of $D_{60}/D_{10}$ that is a ratio between a particle diameter $D_{60}$ ($\mu$m) at which a cumulative volume from a small particle side becomes 60% and a particle diameter $D_{10}$ ($\mu$m) at which the cumulative volume from the small particle side becomes 10% is 2.0 or less, and a BET specific surface area is 20 m$^2$/g or more.

[14] The method for producing the precursor for the lithium secondary battery positive electrode active material according to [13], in which, in the step (D), the stirring means is rotated under a condition where a Taylor number becomes 60 or more and 20000 or less.

[Examples]

Next, the present invention will be described in more detail using examples.

<Composition analysis of LiMO>

The composition analysis of LiMO to be produced by a method to be described below was carried out by the method described in the above-described [composition analysis of LiMO].

<Composition analysis of precursor>

The composition analysis of a precursor to be produced by a method to be described below was carried out by a method to be described below.

First, a metal composite hydroxide obtained as the precursor was held at 650°C for 5 hours in an air atmosphere and then cooled to room temperature to obtain a metal composite oxide. The weights (g) of the metal composite hydroxide and the metal composite oxide were measured, and the weight reduction rate (%) of the precursor before and after heating was calculated by the following formula.

$$\text{Weight reduction rate (\%) of precursor} = \text{(weight (g) of metal composite}$$

$$\text{hydroxide - weight (g) of metal composite oxide)} \div \text{weight (g) of metal composite}$$

$$\text{hydroxide} \times 100.$$

The composition analyses of the metal composite hydroxide and the metal composite oxide were carried out using an ICP emission spectrometer (Optima 7300, manufactured by Perkin Elmer Inc.) after dissolving the powders of the metal composite hydroxide and the metal composite oxide in hydrochloric acid.

Furthermore, z and t in the following composition formula (A) were calculated by the following formulae from the total mass parts (%) of a metal in the metal composite hydroxide obtained by the composition analysis, the total molar mass (g/mol) of the metal in the metal composite hydroxide, and the weight reduction rate (%) of the precursor.

$$\mathrm{Ni}_{1-x}\mathrm{M}_x\mathrm{O}_z(\mathrm{OH})_{2-t} \ldots \qquad (A)$$

$$z = (100 - \text{total mass parts (\%) of metal in metal composite hydroxide} - \text{(molar}$$

$$\text{mass (g/mol) of oxygen} + \text{molar mass (g/mol) of hydrogen)} \times 2 \div \text{(molar mass (g/mol) of}$$

$$\text{oxygen} + \text{molar mass (g/mol) of hydrogen} \times 2) \times \text{weight reduction rate (\%) of precursor)}$$

$$\div \text{molar mass (g/mol) of oxygen} \div \text{total mass parts (\%) of metal in metal composite}$$

$$\text{hydroxide} \times \text{total molar mass (g/mol) of metal in metal composite hydroxide.}$$

$$t = 2 - \text{(molar mass (g/mol) of oxygen} + \text{molar mass (g/mol) of hydrogen)} \times 2 \div$$

$$\text{(molar mass (g/mol) of oxygen} + \text{molar mass (g/mol) of hydrogen} \times 2) \times \text{weight}$$

$$\text{reduction rate (\%) of precursor} \div \text{(molar mass (g/mol) of oxygen} + \text{molar mass (g/mol) of}$$

$$\text{hydrogen)} \div \text{total mass parts (\%) of metal in metal composite hydroxide} \times \text{total molar}$$

$$\text{mass (g/mol) of metal in metal composite hydroxide.}$$

<Measurement of particle size distribution>

The cumulative volume particle size distributions of the precursor and LiMO to be produced by a method to be described below were measured by the method described in the [Measurement of cumulative volume particle size distribution] section. $D_{60}/D_{10}$ and $D_{10}/D_{50}$ were each calculated using the obtained values of $D_{10}$, $D_{50}$, and $D_{60}$.

<BET specific surface area>

The BET specific surface area of the precursor or LiMO to be produced by the method to be described below was carried out by the method described in the [Measurement of BET specific surface area] section.

<X-ray diffraction measurement using CuKα rays>

The powder X-ray diffraction measurement of LiMO to be produced by the method to be described below was carried out by the method described in the [Powder X-ray diffraction measurement] section, and α/β was calculated from the obtained α and β. In addition, as a result of the measurement, LiMO's to be produced by the method to be described below all had a hexagonal crystal structure belonging to a space group R-3m.

<Measurement of cycle retention rate>

The cycle retention rate was measured by the method described in the [Method for measuring cycle retention rate] section. In addition, the initial efficiency was calculated by the following formula using the value of the initial discharge capacity and the value of the initial charge capacity.

$$\text{Initial efficiency} = \text{initial discharge capacity (mAh/g)} \div \text{initial charge capacity (mAh/g)} \times 100.$$

<<Example 1>>

As a reactor, a Taylor vortex continuous stirred reactor (TVF-1 manufactured by Tipton Corp.) was used.
In a Taylor vortex continuous stirred reactor 40 shown in FIG. 3, the inner cylinder diameter Ro of a cylinder 41 was set to 101 mm, the outer cylinder diameter Ri of stirring means 42 was set to 91.8 mm, and the gap width d1, which was the distance between the cylinder 41 and the stirring means 42, was set to 4.6 mm. The gap width d1 is a value obtained by multiplying the difference between the inner cylinder diameter Ro of the cylinder 41 and the outer cylinder diameter Ri of the stirring means 42 by 1/2.
A nickel sulfate aqueous solution, a cobalt sulfate aqueous solution, and a manganese sulfate aqueous solution were mixed together in fractions at which the atomic ratio among Ni, Co, and Mn reached 91:5:4, thereby preparing a metal-containing aqueous solution.
The adjusted metal-containing aqueous solution was loaded into a raw material liquid storage tank T1 shown in FIG. 2, a sodium hydroxide aqueous solution is loaded into a raw material liquid storage tank T2 as a pH-adjusting solution, and an ammonium sulfate aqueous solution was loaded into a raw material liquid storage tank T3 as a complexing agent solution.
An introduction opening 43a shown in FIG. 3 is connected to the raw material liquid storage tank T1 through a transport pump P1 and a heat exchanger H1, an introduction opening 43b is connected to the raw material liquid storage tank T2 through a transport pump P2 and a heat exchanger H2, and an introduction opening 43c is connected to the raw material liquid storage tank T3 through a transport pump P3 and a heat exchanger H3, which are shown in FIG. 2.
After a reaction channel was filled with water, the fluid temperature in the reaction channel S was held at 55°C.
While rotating the stirring means 42 of the Taylor vortex continuous stirred reactor 40, the metal-containing aqueous solution from the introduction opening 43a, the sodium hydroxide aqueous solution from the introduction opening 43b, and the ammonium sulfate aqueous solution from the introduction opening 43c were each continuously introduced into the reaction channel S in fractions at which the ratio between the mole number of metal and the mole number of ammonium sulfate became 3.59 and the ratio between the mole number of sodium hydroxide and the mole number of the metal became 8.68.
At this time, a thermometer was installed at a temperature measurement position Mb, and the temperature of the sodium hydroxide aqueous solution was adjusted with the heat exchanger H2 to a condition where the difference between the maximum temperature and the minimum temperature of the sodium hydroxide aqueous solution at the temperature measurement position Mb became 1.4°C.
The rotation speed of the stirring means 42 was set to 183 rad/s, the Taylor number was set to 5140, the total introduction rate of all of the raw material liquids was set to 5.14 mL/min, a reactant was retained in the reaction channel S for 112 minutes, and then the particles of a nickel cobalt manganese composite hydroxide were collected from a discharge opening 44 and stored in a reactant storage tank 50.
The nickel cobalt manganese composite hydroxide particles were washed, then dehydrated with a centrifugal separator, isolated, and dried at 120°C, thereby obtaining a nickel cobalt manganese composite hydroxide 1.
As a result of the composition analysis of the nickel cobalt manganese composite hydroxide 1, it was found that, in the composition formula (A), x = 0.092, z = 0.12, t = -0.12, and the element M was Co and Mn.
The values of $D_{60}/D_{10}$, BET specific surface area, $D_{10}/D_{50}$, and $6/(D_{50} \times S)$ of the nickel cobalt manganese composite hydroxide 1 are shown in Table 1 below.

«Example 2»

A nickel cobalt manganese composite hydroxide 2 was obtained by the same method as in Example 1 except that the ratio between the mole number of metal to the mole number of ammonium sulfate was set to 3.56, the rotation speed of the stirring means 42 was set to 79 rad/s, the Taylor number was set to 5140, the total introduction rate of all of the raw material liquids was set to 5.11 mL/min, the ratio between the mole number of sodium hydroxide and the mole number of the metal was set to 8.67, the retention time in the reaction channel was set to 113 minutes, and the temperature of a sodium hydroxide aqueous solution was adjusted to a condition where the difference between the maximum temperature and the minimum temperature of the sodium hydroxide aqueous solution at the temperature measurement position Mb became 1.3°C.

As a result of the composition analysis of the nickel cobalt manganese composite hydroxide 2, it was found that, in the composition formula (A), x = 0.091, z = 0.09, t = -0.21, and the element M was Co and Mn.

The values of $D_{60}/D_{10}$, BET specific surface area, $D_{10}/D_{50}$, and $6/(D_{50} \times S)$ of the nickel cobalt manganese composite hydroxide 2 are shown in Table 1 below.

<<Comparative Example 1>>

A nickel cobalt manganese composite hydroxide 3 was obtained by the same method as in Example 1 except that the ratio between the mole number of the metal and the mole number of ammonium sulfate was set to 9.53, the ratio between the total introduction rate of all of the raw material liquids was set to 5.26 mL/min, the ratio between the mole number of sodium hydroxide and the mole number of the metal was set to 7.05, the retention time in the reaction channel was set to 109 minutes, and the temperature of a sodium hydroxide aqueous solution was adjusted to a condition where the difference between the maximum temperature and the minimum temperature of the sodium hydroxide aqueous solution at the temperature measurement position Mb became 1.9°C.

As a result of the composition analysis of the nickel cobalt manganese composite hydroxide 3, it was found that, in the composition formula (A), x = 0.091, z = 0.08, t = -0.11, and the element M was Co and Mn.

The values of $D_{60}/D_{10}$, BET specific surface area, $D_{10}/D_{50}$, and $6/(D_{50} \times S)$ of the nickel cobalt manganese composite hydroxide 3 are shown in Table 1 below.

<<Comparative Example 2>>

Using a reaction tank equipped with a stirrer and an overflow pipe, a condensation tank connected to the overflow pipe, and a device having a mechanism for carrying out circulation from the condensation tank to the reaction tank, water was put into the reaction tank equipped with the stirrer and the overflow pipe, then, a sodium hydroxide aqueous solution was added, and the solution temperature in the reaction tank was held at 50°C.

A nickel sulfate aqueous solution, a cobalt sulfate aqueous solution, and a manganese sulfate aqueous solution were mixed together in fractions at which the atomic ratio among Ni, Co, and Mn reached 91:5:4, thereby preparing a metal-containing aqueous solution.

Next, the adjusted metal-containing aqueous solution and an ammonium sulfate aqueous solution as a complexing agent solution were added into the reaction tank by a batch-type coprecipitation method under stirring. A sodium hydroxide aqueous solution was timely added dropwise under a condition where the pH of the solution in the reaction tank reached 10.5 (when measured at a temperature of 40°C). After 33 hours, the dropwise addition of the sodium hydroxide aqueous solution was stopped, and the particles of a nickel cobalt manganese composite hydroxide were obtained.

The nickel cobalt manganese composite hydroxide particles were washed, then dehydrated with a centrifugal separator, isolated, and dried at 105°C, thereby obtaining a nickel cobalt manganese composite hydroxide 4.

As a result of the composition analysis of the nickel cobalt manganese composite hydroxide 4, it was found that, in the composition formula (A), x = 0.091, z = 0.13, t = -0.18, and the element M was Co and Mn.

The values of $D_{60}/D_{10}$, BET specific surface area, $D_{10}/D_{50}$, and $6/(D_{50} \times S)$ of the nickel cobalt manganese composite hydroxide 4 are shown in Table 1 below.

<<Comparative Example 3>>

After water was poured into a reaction tank equipped with a stirrer and an overflow pipe, a sodium hydroxide aqueous solution was added thereto, and the solution temperature was maintained at 60°C.

A nickel sulfate aqueous solution, a cobalt sulfate aqueous solution, and a manganese sulfate aqueous solution were mixed together in fractions at which the atomic ratio among Ni, Co, and Mn reached 91:5:4, thereby preparing a metal-containing aqueous solution.

Next, the adjusted metal-containing aqueous solution and an ammonium sulfate aqueous solution as a complexing agent solution were continuously added into the reactor under stirring. A sodium hydroxide aqueous solution was timely added dropwise under a condition where the pH of the solution in the reactor reached 12.0 (when measured at a temperature of 40°C), and nickel cobalt manganese composite hydroxide particles were obtained.

The nickel cobalt manganese composite hydroxide particles were washed, then dehydrated with a centrifugal separator, isolated, and dried at 105°C, thereby obtaining a nickel cobalt manganese composite hydroxide powder.

The nickel cobalt manganese composite hydroxide powder was classified with an elbow jet classifier manufactured by Matsubo Corporation, and a nickel cobalt manganese composite hydroxide 5 was obtained.

As a result of the composition analysis of the nickel cobalt manganese composite hydroxide 5, it was found that, in the composition formula (A), x = 0.090, z = 0.05, t = -0.18, and the element M was Co and Mn.

The values of $D_{60}/D_{10}$, BET specific surface area, $D_{10}/D_{50}$, and $6/(D_{50} \times S)$ of the nickel cobalt manganese composite hydroxide 5 are shown in Table 1 below.

[Table 1]

|  | Reactor | Inlet temperature (°C) | Composition | $D_{60}/D_{10}$ | BET (m2/g) | $6/(D_{50} \times S)$ | $D_{10}/D_{50}$ |
|---|---|---|---|---|---|---|---|
| Example 1 | Taylor reactor | 1.4 | Ni/Co/Mn = 91/5/4 | 1.66 | 69.5 | 0.027 | 0.65 |
| Example 2 | Taylor reactor | 1.3 | Ni/Co/Mn = 91/5/4 | 1.93 | 32.9 | 0.032 | 0.58 |
| Comparative Example 1 | Taylor reactor | 1.9 | Ni/Co/Mn = 91/5/4 | 2.14 | 25.9 | 0.12 | 0.53 |
| Comparative Example 2 | Semibatch reactor | - | Ni/Co/Mn = 91/5/4 | 1.67 | 13.6 | 0.12 | 0.65 |
| Comparative Example 3 | Continuous reactor | - | Ni/Co/Mn = 91/5/4 | 1.65 | 18.2 | 0.082 | 0.66 |

«Example 3»

The obtained nickel cobalt manganese composite hydroxide 1 was held at 650°C for 5 hours in an oxygen-containing atmosphere and then cooled to room temperature, thereby obtaining a nickel cobalt manganese composite oxide 1.

Lithium hydroxide weighed at a fraction at which the amount of Li with respect to the total amount of 1 of Ni, Co, and Mn contained in the obtained nickel cobalt manganese composite oxide 1 (mole ratio) became 1.10 and potassium carbonate weighed at a fraction at which the amount of potassium carbonate with respect to the total amount of potassium carbonate, which was an inert melting agent, (mole ratio) became 0.10 were mixed with a mortar to obtain a mixture.

Next, the obtained mixture was held at 790°C for 5 hours in an oxygen-containing atmosphere and then cooled to room temperature, thereby obtaining a calcined product.

The obtained calcined product was washed, then dehydrated, held at 760°C for 5 hours in an oxygen-containing atmosphere, and then cooled to room temperature, thereby obtaining powdery LiMO-1.

As a result of the composition analysis of LiMO-1, it was found that, in the composition formula (1), m = 0.02, n = 0.096, and the element M was Co and Mn.

The values of $D_{60}/D_{10}$, BET specific surface area, $D_{10}/D_{50}$, and $\alpha/\beta$ of LiMO-1 are shown in Table 2 below.

«Example 4»

The obtained nickel cobalt manganese composite oxide 1, lithium hydroxide weighed at a fraction at which the amount of Li with respect to the total amount of 1 of Ni, Co, and Mn contained in the obtained nickel cobalt manganese composite oxide 1 (mole ratio) became 1.10, and potassium carbonate weighed at a fraction at which the amount of potassium carbonate with respect to the total amount of potassium carbonate, which was an inert melting agent, (mole ratio) became 0.10 were mixed with a mortar to obtain a mixture.

Next, the obtained mixture was held and heated at 820°C for 5 hours in an oxygen-containing atmosphere and then cooled to room temperature, thereby obtaining a calcined product.

The obtained calcined product was washed, then dehydrated, held at 760°C for 5 hours in an oxygen-containing atmosphere, and then cooled to room temperature, thereby obtaining powdery LiMO-2.

A composition analysis of LiMO-2 revealed that m=0.01 and n=0.095 in the composition formula (1), and the element M was Co and Mn.

The values of $D_{60}/D_{10}$, BET specific surface area, $D_{10}/D_{50}$, and $\alpha/\beta$ of LiMO-2 are shown in Table 2 below.

«Example 5»

The obtained nickel cobalt manganese composite oxide 1, lithium hydroxide weighed at a fraction at which the amount of Li with respect to the total amount of 1 of Ni, Co, and Mn contained in the obtained nickel cobalt manganese composite oxide 1 (mole ratio) became 1.10, and potassium carbonate weighed at a fraction at which the amount of potassium carbonate with respect to the total amount of potassium carbonate, which was an inert melting agent, (mole ratio) became 0.10 were mixed with a mortar to obtain a mixture.

Next, the obtained mixture was held and calcined at 850°C for 5 hours in an oxygen-containing atmosphere and then cooled to room temperature, thereby obtaining a calcined product.

The obtained calcined product was washed, then dehydrated, held at 760°C for 5 hours in an oxygen-containing atmosphere, and then cooled to room temperature, thereby obtaining powdery LiMO-3.

A composition analysis of LiMO-3 revealed that m=0.00 and n=0.095 in the composition formula (1), and the element M was Co and Mn.

The values of $D_{60}/D_{10}$, BET specific surface area, $D_{10}/D_{50}$, and $\alpha/\beta$ of LiMO-3 are shown in Table 2 below.

<<Comparative Example 4>>

The obtained nickel cobalt manganese composite hydroxide 3, lithium hydroxide weighed at a fraction at which the amount of Li with respect to the total amount of 1 of Ni, Co, and Mn contained in the obtained nickel cobalt manganese composite hydroxide (mole ratio) became 1.10, and potassium carbonate weighed at a fraction at which the amount of potassium carbonate with respect to the total amount of potassium carbonate, which was an inert melting agent, (mole ratio) became 0.10 were mixed with a mortar to obtain a mixture.

Next, the obtained mixture was held and heated at 820°C for 5 hours in an oxygen-containing atmosphere and then cooled to room temperature, thereby obtaining a calcined product.

The obtained calcined product was washed, then dehydrated, held at 760°C for 5 hours in an oxygen-containing atmosphere, and then cooled to room temperature, thereby obtaining powdery LiMO-4.

A composition analysis of LiMO-4 revealed that m=0.01 and n=0.092 in the composition formula (1), and the element M was Co and Mn.

The values of $D_{60}/D_{10}$, BET specific surface area, $D_{10}/D_{50}$, and $\alpha/\beta$ of LiMO-4 are shown in Table 2 below.

<<Comparative Example 5»

The obtained nickel cobalt manganese composite hydroxide 4, lithium hydroxide weighed at a fraction at which the amount of Li with respect to the total amount of 1 of Ni, Co, and Mn contained in the obtained nickel cobalt manganese composite hydroxide 4 (mole ratio) became 1.20, and potassium sulfate weighed at a fraction at which the amount of potassium sulfate with respect to the total amount of potassium sulfate, which was an inert melting agent, (mole ratio) became 0.10 were mixed with a mortar to obtain a mixture.

Next, the obtained mixture was held at 940°C for 5 hours in an oxygen-containing atmosphere and then cooled to room temperature, thereby obtaining a calcined product.

The obtained calcined product was washed, then dehydrated, held at 760°C for 5 hours in an oxygen-containing atmosphere, and then cooled to room temperature, thereby obtaining powdery LiMO-5.

As a result of the composition analysis of LiMO-5, it was found that, in the composition formula (1), m = -0.07, n = 0.097, and the element M was Co and Mn.

The values of $D_{60}/D_{10}$, BET specific surface area, $D_{10}/D_{50}$, and $\alpha/\beta$ of LiMO-5 are shown in Table 2 below.

<<Comparative Example 6>>

The obtained nickel cobalt manganese composite hydroxide 5, lithium hydroxide weighed at a fraction at which the amount of Li with respect to the total amount of 1 of Ni, Co, and Mn contained in the obtained nickel cobalt manganese composite hydroxide 5 (mole ratio) became 1.10, and potassium carbonate weighed at a fraction at which the amount of potassium carbonate with respect to the total amount of potassium carbonate, which was an inert melting agent, (mole ratio) became 0.10 were mixed with a mortar to obtain a mixture.

Next, the obtained mixture was held at 850°C for 5 hours in an oxygen atmosphere and then cooled to room temperature, thereby obtaining a calcined product.

The obtained calcined product was washed, then dehydrated, held at 760°C for 5 hours in an oxygen-containing atmosphere, and then cooled to room temperature, thereby obtaining powdery LiMO-6.

A composition analysis of LiMO-6 revealed that m=0.01 and n=0.089 in the composition formula (1), and the element M was Co and Mn.

The values of $D_{60}/D_{10}$, BET specific surface area, $D_{10}/D_{50}$, and $\alpha/\beta$ of LiMO-6 are shown in Table 2 below.

Table 2 shows the initial charge capacities, initial discharge capacities, initial efficiencies, and cycle retention rates of lithium secondary batteries for which LiMO of Examples 3 to 5 and Comparative Examples 4 to 6 was used as CAM.

EP 4 177 221 A1

[Table 2]

| | Precursor | $D_{60}/D_{10}$ | BET (m²/g) | $D_{10}/D_{50}$ | α/β | Initial charge capacity (mAh/g) | Initial discharge capacity (mAh/g) | Initial efficiency (%) | Cycle retention rate (%) |
|---|---|---|---|---|---|---|---|---|---|
| Example 3 | Precursor of Example 1 | 2.34 | 0.50 | 0.49 | 1.73 | 243.0 | 198.1 | 81.5 | 90.0 |
| Example 4 | Precursor of Example 1 | 2.19 | 0.41 | 0.52 | 2.09 | 243.0 | 197.3 | 81.2 | 86.6 |
| Example 5 | Precursor of Example 1 | 2.36 | 0.34 | 0.49 | 2.12 | 241.2 | 192.0 | 79.6 | 82.8 |
| Comparative Example 4 | Precursor of Comparative Example 1 | 1.92 | 0.62 | 0.58 | 1.70 | 242.3 | 196.3 | 81.0 | 81.2 |
| Comparative Example 5 | Precursor of Comparative Example 2 | 1.99 | 0.19 | 0.56 | 3.01 | 197.0 | 136.7 | 69.4 | 75.5 |
| Comparative Example 6 | Precursor of Comparative Example 3 | 2.90 | 0.49 | 0.41 | 1.99 | 239.9 | 191.7 | 79.9 | 74.9 |

As described in the above-described results, it was possible to confirm that the lithium secondary batteries for which LiMO of Examples 3 to 5 was used as CAM improved more in cycle retention rates than the comparative examples.

[Reference Signs List]

1: Separator
2: Positive electrode
3: Negative electrode
4: Electrode group
5: Battery can
6: Electrolyte solution
7: Top insulator
8: Sealing body
10: Lithium secondary battery
21: Positive electrode lead
31: Negative electrode lead
40: Taylor vortex continuous stirred reactor
41: Cylinder
42: Stirring means
43: Introduction opening
44: Discharge opening
S: Reaction channel
U: A set of annular vortexes
U1: First annular vortex
U2: Second annular vortex
Ma, Mb, and Mc: Temperature measurement position
Ro: Inner cylinder diameter of cylinder 41
Ri: Outer cylinder diameter of stirring means 42
d1: Gap width
T1, T2, and T3: Raw material liquid storage tank
P1, P2, and P3: Transport pump
H1, H2, and H3: Heat exchanger
50: Reactant storage tank
60: Reaction means

## Claims

1. A precursor for a lithium secondary battery positive electrode active material, comprising at least Ni and an element M,

   wherein the element M is one or more elements selected from the group consisting of Co, Mn, Fe, Cu, Ti, Mg, Al, W, Mo, Nb, Zn, Sn, Zr, Ga, V, B, Si, S, and P,
   when the precursor for the lithium secondary battery positive electrode active material is measured with a laser diffraction type particle size distribution measuring instrument and all in an obtained cumulative particle size distribution curve is set to 100%, a value of $D_{60}/D_{10}$ that is a ratio between a particle diameter $D_{60}$ ($\mu$m) at which a cumulative volume from a small particle side becomes 60% and a particle diameter $D_{10}$ ($\mu$m) at which the cumulative volume from the small particle side becomes 10% is 2.0 or less, and
   a BET specific surface area is 20 $m^2/g$ or more.

2. The precursor for the lithium secondary battery positive electrode active material according to Claim 1, wherein a composition formula (A) is satisfied,

   $$Ni_{1-x}M_xO_z(OH)_{2-t} \ ... \qquad (A)$$

   (in the composition formula (A), $0 < x \leq 0.3$, $0 \leq z \leq 3$, and $-0.5 \leq t \leq 2$ are satisfied, and M is one or more elements selected from the group consisting of Co, Mn, Fe, Cu, Ti, Mg, Al, W, Mo, Nb, Zn, Sn, Zr, Ga, V, B, Si, S, and P).

3. The precursor for the lithium secondary battery positive electrode active material according to Claim 1 or 2, wherein a formula (B) is satisfied,

$$6/(D_{50} \times S) \leq 0.035 \text{ g/cm}^3 ... \text{ (B)}$$

($D_{50}$ is a particle diameter ($\mu$m) at which the cumulative volume from the small particle side becomes 50% when all in the cumulative particle size distribution curve is set to 100%, and S is the BET specific surface area (m$^2$/g) of the precursor for the lithium secondary battery positive electrode active material).

4. The precursor for the lithium secondary battery positive electrode active material according to any one of Claims 1 to 3, wherein a ratio $D_{10}/D_{50}$ between the $D_{10}$ ($\mu$m) and a particle diameter $D_{50}$ ($\mu$m) at which the cumulative volume from the small particle side becomes 50% when all in the cumulative particle size distribution curve is set to 100% is 0.55 or more.

5. The precursor for the lithium secondary battery positive electrode active material according to any one of Claims 1 to 4, wherein the BET specific surface area is 80 m$^2$/g or less.

6. A lithium metal composite oxide having a layered structure, comprising at least Li, Ni and an element M,

wherein the element M is one or more elements selected from the group consisting of Co, Mn, Fe, Cu, Ti, Mg, Al, W, Mo, Nb, Zn, Sn, Zr, Ga, V, B, Si, S, and P,
when the lithium metal composite oxide is measured with a laser diffraction type particle size distribution measuring instrument and all in an obtained cumulative particle size distribution curve is set to 100%, a value of $D_{60}/D_{10}$ that is a ratio between a particle diameter $D_{60}$ ($\mu$m) at which a cumulative volume from a small particle side becomes 60% and a particle diameter $D_{10}$ ($\mu$m) at which the cumulative volume from the small particle side becomes 10% is 2.5 or less, and
a BET specific surface area is 0.30 m$^2$/g or more and 0.60 m$^2$/g or less.

7. The lithium metal composite oxide according to Claim 6, wherein a composition formula (1) is satisfied,

$$\text{Li}[\text{Li}_m(\text{Ni}_{(1-n)}\text{M}_n)_{1-m}]\text{O}_2 ... \qquad (1)$$

(where M is one or more elements selected from the group consisting of Co, Mn, Fe, Cu, Ti, Mg, Al, W, Mo, Nb, Zn, Sn, Zr, Ga, V, B, Si, S, and P, $-0.1 \leq m \leq 0.2$, $0 < n \leq 0.3$, and $0 < m + n < 0.3$ are satisfied).

8. The lithium metal composite oxide according to Claim 6 or 7, wherein a ratio $D_{10}/D_{50}$ between the $D_{10}$ ($\mu$m) and a particle diameter $D_{50}$ ($\mu$m) at which the cumulative volume from the small particle side becomes 50% when all in the cumulative particle size distribution curve is set to 100% is 0.40 or more and less than 0.60.

9. The lithium metal composite oxide according to any one of Claims 6 to 8, wherein a ratio $\alpha/\beta$ between a crystallite size $\alpha$ obtained from a peak within a range of $2\theta = 18.7 \pm 2°$ in X-ray diffraction measurement using CuK$\alpha$ rays and a crystallite size $\beta$ obtained from a peak within a range of $2\theta = 44.6 \pm 2°$ is 1.71 or more and 2.50 or less.

10. A positive electrode active material for a lithium secondary battery, comprising:
the lithium metal composite oxide according to any one of Claims 6 to 9.

11. A positive electrode for a lithium secondary battery, comprising:
the positive electrode active material for a lithium secondary battery according to Claim 10.

12. A lithium secondary battery comprising:
the positive electrode for a lithium secondary battery according to Claim 11.

FIG. 1A

FIG. 1B

# FIG. 2

# FIG. 3

# FIG. 4

## FIG. 5

## FIG. 6

<div align="center">

**INTERNATIONAL SEARCH REPORT**

</div>

| | International application No. |
|---|---|
| | PCT/JP2021/025343 |

**A. CLASSIFICATION OF SUBJECT MATTER**
Int. Cl. C01G53/00(2006.01)i, H01M4/505(2010.01)i, H01M4/525(2010.01)i
FI: H01M4/525, H01M4/505, C01G53/00 A

According to International Patent Classification (IPC) or to both national classification and IPC

**B. FIELDS SEARCHED**

Minimum documentation searched (classification system followed by classification symbols)
Int. Cl. H01M4/00-4/62, C01G53/00

Documentation searched other than minimum documentation to the extent that such documents are included in the fields searched
Published examined utility model applications of Japan    1922-1996
Published unexamined utility model applications of Japan   1971-2021
Registered utility model specifications of Japan          1996-2021
Published registered utility model applications of Japan  1994-2021

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | WO 2020/116649 A1 (SUMITOMO CHEMICAL CO., LTD.) 11 June 2020 (2020-06-11), paragraphs [0132]-[0135], [0140]-[0143], table 3 | 1-5 |
| X | WO 2017/204164 A1 (SUMITOMO CHEMICAL CO., LTD.) 30 November 2017 (2017-11-30), paragraphs [0077], [0078], [0082], table 2 | 1, 3-5 |
| X | JP 2018-6346 A (JX NIPPON MINING & METALS CORP.) 11 January 2018 (2018-01-11), paragraph [0026], table 1 | 6-12 |
| X | JP 2018-095523 A (SUMITOMO CHEMICAL CO., LTD.) 21 June 2018 (2018-06-21), paragraphs [0099]-[0101], example 1, table 1 | 6, 10-12 |

☒ Further documents are listed in the continuation of Box C.   ☒ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 07.09.2021 | 14.09.2021 |

| Name and mailing address of the ISA/ | Authorized officer |
|---|---|
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

<div align="center">35</div>

# EP 4 177 221 A1

**INTERNATIONAL SEARCH REPORT**

International application No.

PCT/JP2021/025343

C (Continuation).    DOCUMENTS CONSIDERED TO BE RELEVANT

| Category* | Citation of document, with indication, where appropriate, of the relevant passages | Relevant to claim No. |
|---|---|---|
| A | JP 2016-088834 A (SUMITOMO METAL MINING CO., LTD.) 23 May 2016 (2016-05-23), table 2 | 1-12 |
| A | JP 2019-003955 A (SUMITOMO CHEMICAL CO., LTD.) 10 January 2019 (2019-01-10), tables 2, 3 | 1-12 |
| A | WO 2017/082314 A1 (ASAHI GLASS CO., LTD.) 18 May 2017 (2017-05-18), table 2 | 1-12 |
| A | JP 2020-035693 A (SUMITOMO METAL MINING CO., LTD.) 05 March 2020 (2020-03-05), paragraph [0126] | 1-12 |
| A | JP 2018-024570 A (SUMITOMO METAL MINING CO., LTD.) 15 February 2018 (2018-02-15), examples 6, 8 | 1-12 |
| A | JP 2018-070419 A (SUMITOMO METAL MINING CO., LTD.) 10 May 2018 (2018-05-10), tables 1, 2 | 1-12 |

Form PCT/ISA/210 (continuation of second sheet) (January 2015)

**INTERNATIONAL SEARCH REPORT**
Information on patent family members

International application No.

PCT/JP2021/025343

| Patent Documents referred to in the Report | Publication Date | Patent Family | Publication Date |
|---|---|---|---|
| WO 2020/116649 A1 | 11.06.2020 | JP 6646130 B1<br>paragraphs [0127]-[0130], [0135]-[0138], fig. 3<br>JP 2020-92070 A | |
| WO 2017/204164 A1 | 30.11.2017 | US 2019/0296347 A1<br>paragraphs [0141]-[0144], [0150], table 2<br>CN 109155410 A<br>KR 10-2019-0009299 A | |
| JP 2018-6346 A | 11.01.2018 | (Family: none) | |
| JP 2018-095523 A | 21.06.2018 | US 2019/0330072 A1<br>paragraphs [0184]-[0190], example 1, table 1<br>WO 2018/110256 A1<br>EP 3556732 A1<br>CN 110072816 A<br>KR 10-2019-0088490 A | |
| JP 2016-088834 A | 23.05.2016 | US 2017/0305757 A1<br>table 2<br>WO 2016/067960 A1<br>EP 3225591 A1<br>CN 107001070 A | |
| JP 2019-003955 A | 10.01.2019 | (Family: none) | |
| WO 2017/082314 A1 | 18.05.2017 | US 2020/0266436 A1<br>table 2<br>KR 10-2018-0083855 A<br>CN 108432001 A | |
| JP 2020-035693 A | 05.03.2020 | (Family: none) | |
| JP 2018-024570 A | 15.02.2018 | (Family: none) | |
| JP 2018-070419 A | 10.05.2018 | US 2020/0052295 A1<br>tables 1, 2<br>WO 2018/079809 A1<br>EP 3533764 A<br>KR 10-2019-0078603 A<br>CN 110121481 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2020116515 A
- JP 4412568 B
- WO 2019098384 A1
- US 20200274158 A1
- JP 2000030686 A
- US 20090111025 A1
- JP 2004095400 A
- WO 2020208872 A1
- US 20160233510 A1
- US 20120251871 A1
- US 20180159169 A1
- US 20200259213 A1

**Non-patent literature cited in the description**

- **YOSHIO WASEDA ; EIICHIRO MATSUBARA.** X-ray structural analysis - determining the arrangement of atoms. 30 April 2002